Europäisches Patentamt

European Patent Office

Office européen des brevets

(19)

(11) **EP 1 261 211 A2**

(12) **EUROPEAN PATENT APPLICATION**

(43) Date of publication:
  **27.11.2002 Bulletin 2002/48**

(51) Int Cl.7: **H04N 7/32**

(21) Application number: **02010719.9**

(22) Date of filing: **14.05.2002**

(84) Designated Contracting States:
  **AT BE CH CY DE DK ES FI FR GB GR IE IT LI LU
  MC NL PT SE TR**
  Designated Extension States:
  **AL LT LV MK RO SI**

(30) Priority: **15.05.2001 JP 2001144829**

(71) Applicant: **Monolith Co., Ltd.**
  **Tokyo 106-0045 (JP)**

(72) Inventors:
  • **Akiyoshi, Kozo**
    **Tokyo 106-0045 (JP)**
  • **Akiyoshi, Nobuo**
    **Tokyo 106-0045 (JP)**

(74) Representative: **Pfenning, Meinig & Partner GbR**
  **Mozartstrasse 17**
  **80336 München (DE)**

(54) **Method and apparatus for coding and decoding image data**

(57)    A matching processor (14) detects correspondence information between key frames. A judging unit (106) detects motion vectors from the correspondence information. And when variation of the field of view is large, added information is generated to that effect. A stream generator (104) generates a coded data stream by incorporating the added information. An intermediate image generator (18) servings as a decoding side detects the added information and trims down edges of an intermediate image, so that an unnatural invalidated region is cut out and displayed properly.

Fig.30

EP 1 261 211 A2

**Description**

The present invention relates to an image data processing technology, and it particularly relates to method and apparatus for coding and decoding image data containing a plurality of frames.

The MPEG (Motion Picture Expert Group) which is de facto world standard of motion compression has expanded its targeted area to transmission media such as network and broadcast from mere storage media such as CDs. There is no doubt that the digitization of the broadcast has prevailed around the MPEG compression coding technology. A barrier that has existed between the broadcast and the communications disappears, and the diversification of service-providing businesses becomes indispensable. Thus, we are facing the situation where it is hard to predict how the digital culture would evolve in this age of broad band.

Even among such the chaotic situation, there is one thing certain about the direction on the compression technology of motion pictures. That is the consistency where both higher compression rate and image quality shall be achieved. It is the well-known fact that block distortion in MPEG is responsible for keeping the compression rate from being improved.

The present invention has been made in view of the foregoing circumstances and an object thereof is to provide a coding and decoding technique by which to realize efficient compression of image data, and is, in particular, to provide a new technology to attain a higher compression rate.

Image data processed in the present invention may be motion pictures or still pictures, in which three-dimensional objects are made into two dimension, such as medical images. Namely, the image may change along time axis or spatial axis. Stated in still another way, all types of images of arbitrary dimension which can be grasped as a frame can be processed. Hereinafter, term "key frame" generally indicates a reference frame which is an object for matching and other processings while term "intermediate frame" a non-reference frame on which the matching and other processings are not performed. In this present patent specification, for the purpose of simplicity, the term "frame" is both used as a unit of the image unless otherwise indicated, and as data itself constituting the unit, that are, "frame data".

A preferred embodiment according to the present invention relates to an image coding method. This method includes: detecting corresponding point data between key frames by image matching; and incorporating the corresponding point data and added information by which to invalidate at least part of a reproduction image, for example, a peripheral region thereof, which is to be generated at a decoding side based on the corresponding point data, so as to generate a coded data stream.

The "added information" may be indication of a region to be invalidated, for example, a region where "the right edge of the image is cut out by an amount of 10 pixels in width in a strip shape", or the combination of the region and contents of its processing. Besides being the cutting-out processing, the invalidation may be such that data for the region are forcibly replaced with certain image data. In this case, this "image data" which replaces the region may be thought of as the added information.

The image region excluding the above-described invalidated region (this image region being also referred to as a "remaining region") is useful and beneficial in the sense that the remaining region bearing a shape of, for example, being rectangular, which can be appreciated, as it is, as an image, makes simple a processing which comes after. Now, if a display system is of 800 X 600, then, for example, it is desirable that the size of the key frame be in advance taken to be a bit larger than 800 X 600, e.g., 1000 X 800, so that the remaining region may be adjusted to the size of 800 X 600.

The invalidation becomes meaningful when, for example, a camera which photographed key frames pans (namely, changes the viewing direction itself) or the camera zooms in and out (namely, magnification or reduction in the same radial direction). In this case, there are caused pixels which can not correspond between the key frames, thus causing erroneous correspondence in the matching. This erroneous correspondence is generally liable to be caused mainly in edges of the image. This is because points which are photographed in one of the two frames but are excluded from the field of view in other key frame occur mainly in the edge. Thus, the region to be invalidated is speculated to be a strip-shaped region surrounding the edge of the image as a picture frame or its part. This can be said to be the image trimming in the sense that the edge is thrown away.

The corresponding point data may be incorporated into a coded data stream after data corresponding to a region to be invalidated are deleted. In the case of the above-described example, since "an amount of 10 pixels in width in the right edge of the image" does not need the corresponding point data therefor, this would be deleted. Conversely, the image region where the corresponding point data do not exit may be interpreted as being invalidated, by a decoding side.

Another preferred embodiment according to the present invention includes: detecting corresponding point data between key frames by image matching; and incorporating data of the key frames whose at least part of region was invalidated, and the detected corresponding point data, so as to generate a coded data stream. The significance lies in the feature that the key frames themselves are processed.

Still another preferred embodiment according to the present invention includes: detecting corresponding point data between key frames by image matching; and incorporating added information by which to invalidate at least part of region of a reproduction image which is to be generated at a decoding side based on the detected corresponding point data, into the corresponding point data, so as to generate a coded data stream. Thus, the corresponding point data contain, as a region to be invalidated, for example, information such as "an amount of 10 pixels in the right edge of the image." Since the corresponding point data exist in the coded data stream, the purpose thereof is to serve the convenience of transmission and so forth by attaching the added information to a part of the corresponding point data. Moreover, in place of adding the added information, the corresponding point data may be generated in a state where data corresponding to the region to be invalidated are simply deleted.

It is to be noted that the step of detecting the corresponding point data by image matching is not indispensable in any of the embodiments, and the corresponding point data prepared at any one of places may be utilized.

Still another preferred embodiment according to the present invention relates also to an image coding method. This method includes: acquiring a coded data stream of an image; and generating an intermediate frame based on corresponding point data between key frames included in the acquired coded data stream, wherein the intermediate frame is generated in a manner that at least part of region thereof is invalidated. The generating may be processed by extracting indication of a region to be invalidated, from the coded data stream, or may be processed by extracting image data which forcibly replaces data of the region to be invalidated, from the coded data stream.

This method may further include: judging the magnitude of variation of field of view of a camera which photographed the key frames based on the corresponding point data. Said invalidating may be executed only when it is judged that the variation of the field of view is substantially large. Though consideration rendered concerning the camera's field of view may be realized at the coding side, it may be also realized at the decoding side.

It is to be noted that any arbitrary replacement or substitution of the above-described structural components and the steps, expressions replaced or substituted in part or whole between a method and an apparatus as well as addition thereof, and expressions changed to a computer program, recording medium or the like are all effective as and encompassed by the present embodiments.

Moreover, this summary of the invention does not necessarily describe all necessarily features so that the invention may also be sub-combination of these described features.

Fig. 1(a) is an image obtained as a result of the application of an averaging filter to a human facial image.

Fig. 1(b) is an image obtained as a result of the application of an averaging filter to another human facial image.

Fig. 1(c) is an image of a human face at $p^{(5,0)}$ obtained in a preferred embodiment in the base technology.

Fig. 1(d) is another image of a human face at $p^{(5,0)}$ obtained in a preferred embodiment in the base technology.

Fig. 1(e) is an image of a human face at $p^{(5,1)}$ obtained in a preferred embodiment in the base technology.

Fig. 1(f) is another image of a human face at $p^{(5,1)}$ obtained in a preferred embodiment in the base technology.

Fig. 1(g) is an image of a human face at $p^{(5,2)}$ obtained in a preferred embodiment in the base technology.

Fig. 1(h) is another image of a human face at $p^{(5,2)}$ obtained in a preferred embodiment in the base technology.

Fig. 1(i) is an image of a human face at $p^{(5,3)}$ obtained in a preferred embodiment in the base technology.

Fig. 1(j) is another image of a human face at $p^{(5,3)}$ obtained in a preferred embodiment in the base technology.

Fig. 2(R) shows an original quadrilateral.

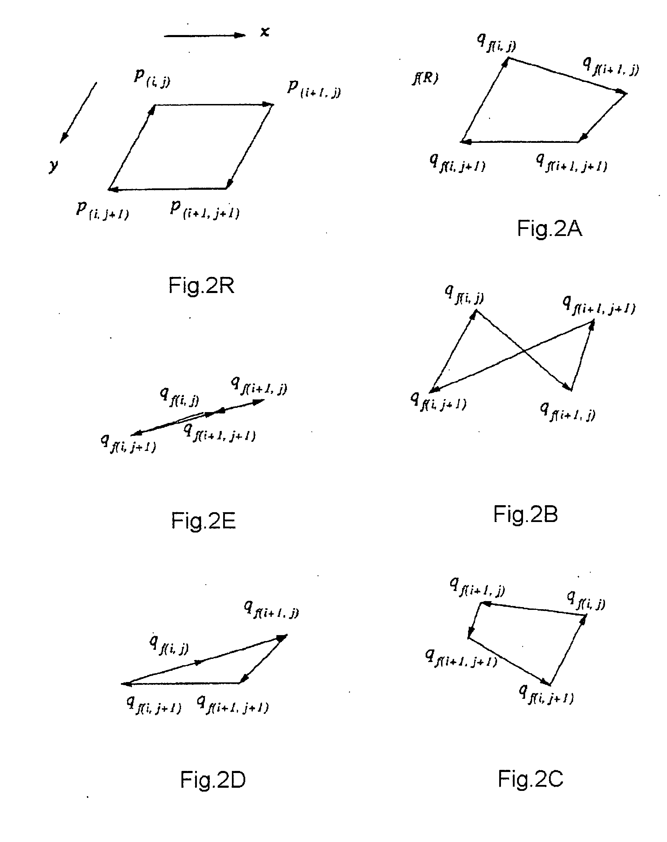

Fig. 2(A) shows an inherited quadrilateral.

Fig. 2(B) shows an inherited quadrilateral.

Fig. 2(C) shows an inherited quadrilateral.

Fig. 2(D) shows an inherited quadrilateral.

Fig. 2(E) shows an inherited quadrilateral.

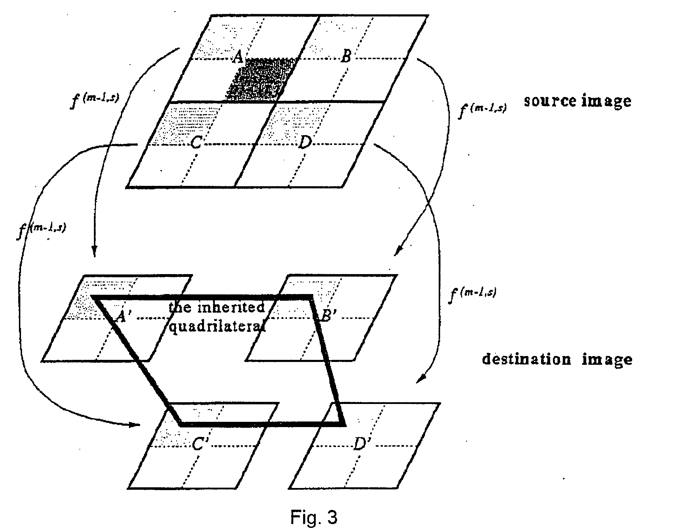

Fig. 3 is a diagram showing the relationship between a source image and a destination image and that between the m-th level and the (m-1)th level, using a quadrilateral.

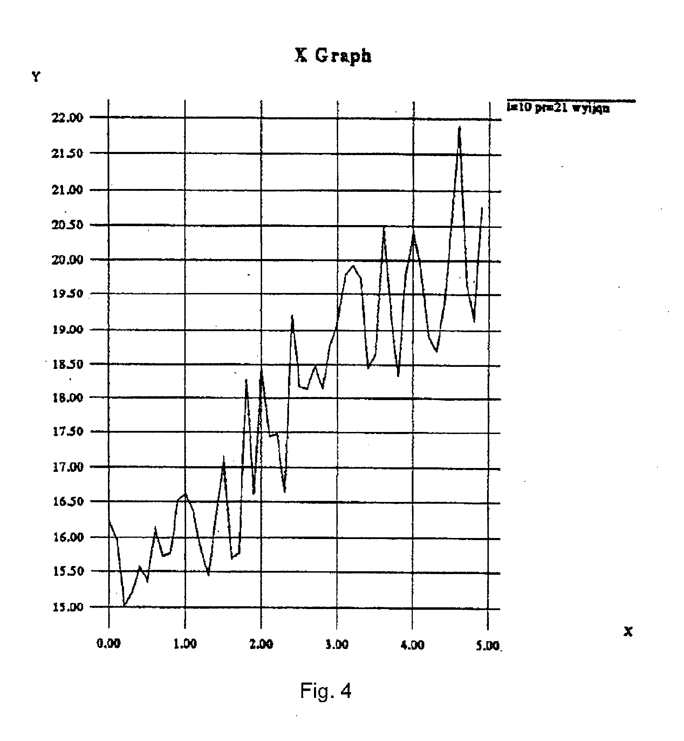

Fig. 4 shows the relationship between a parameter $\eta$ (represented by x-axis) and energy $C_f$ (represented by y-axis).

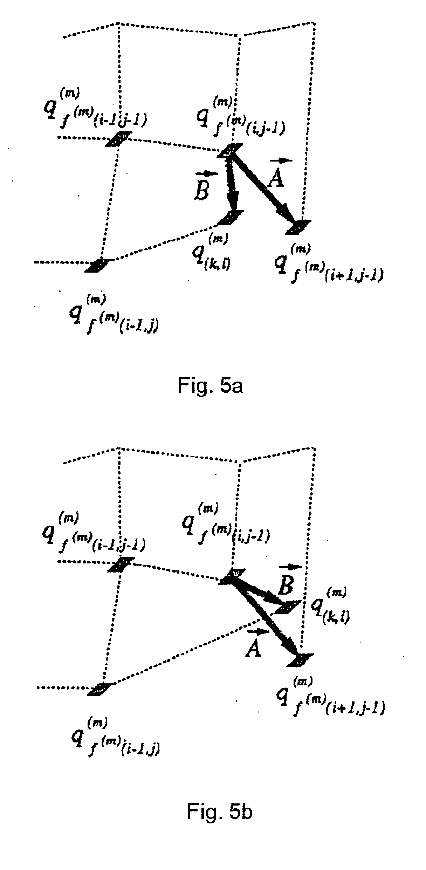

Fig. 5(a) is a diagram illustrating determination of whether or not the mapping for a certain point satisfies the bijectivity condition through the outer product computation.

Fig. 5(b) is a diagram illustrating determination of whether or not the mapping for a certain point satisfies the bijectivity condition through the outer product computation.

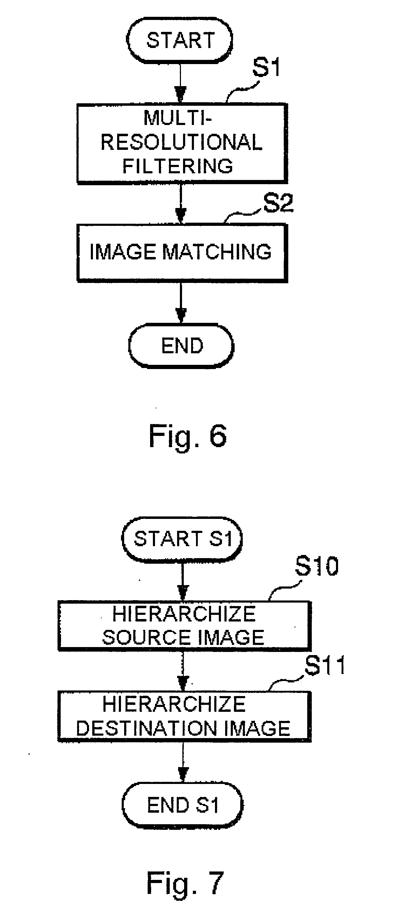

Fig. 6 is a flowchart of the entire procedure of a preferred embodiment in the base technology.

Fig. 7 is a flowchart showing the details of the process at S1 in Fig. 6.

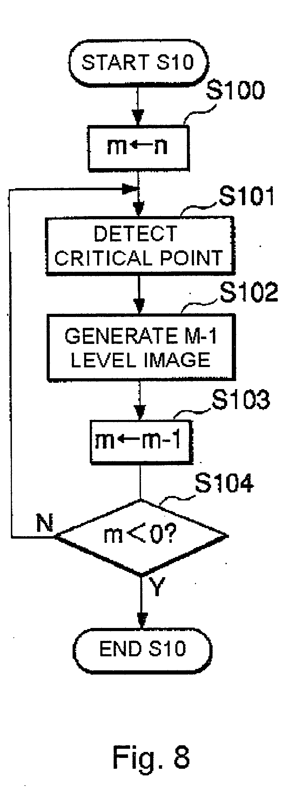

Fig. 8 is a flowchart showing the details of the process at S10 in Fig. 7.

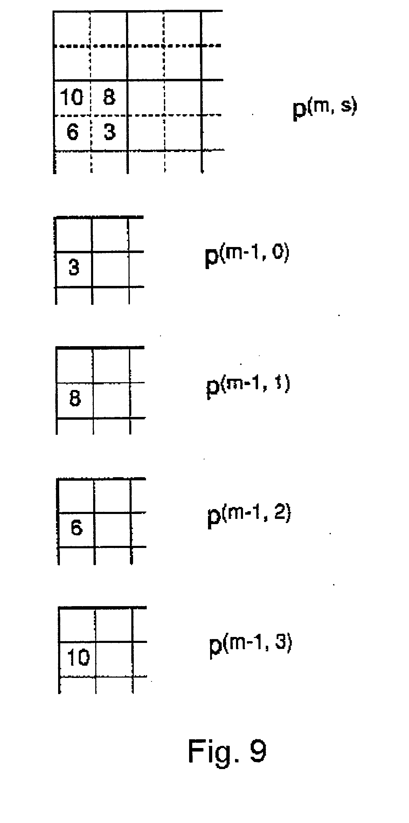

Fig. 9 is a diagram showing correspondence between partial images of the m-th and (m-1)th levels of resolution.

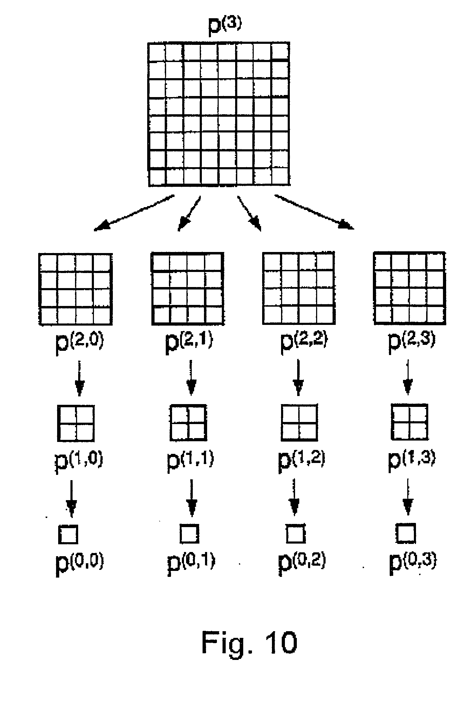

Fig. 10 is a diagram showing source hierarchical images generated in the embodiment in the base technology.

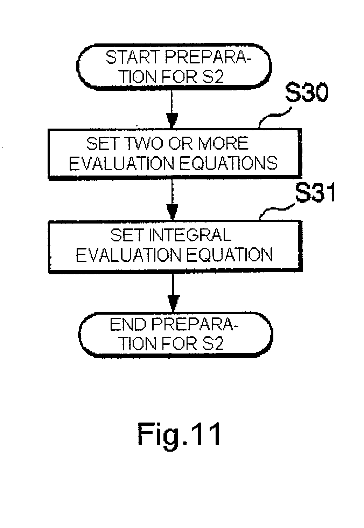

Fig. 11 is a flowchart of a preparation procedure for S2 in Fig. 6.

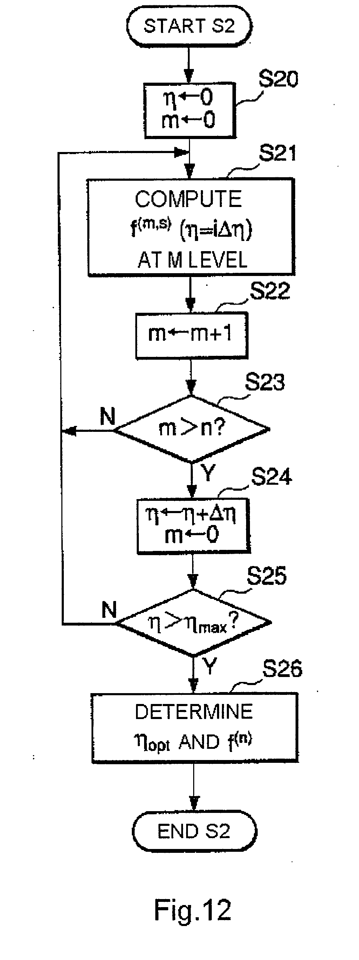

Fig. 12 is a flowchart showing the details of the process at S2 in Fig. 6.

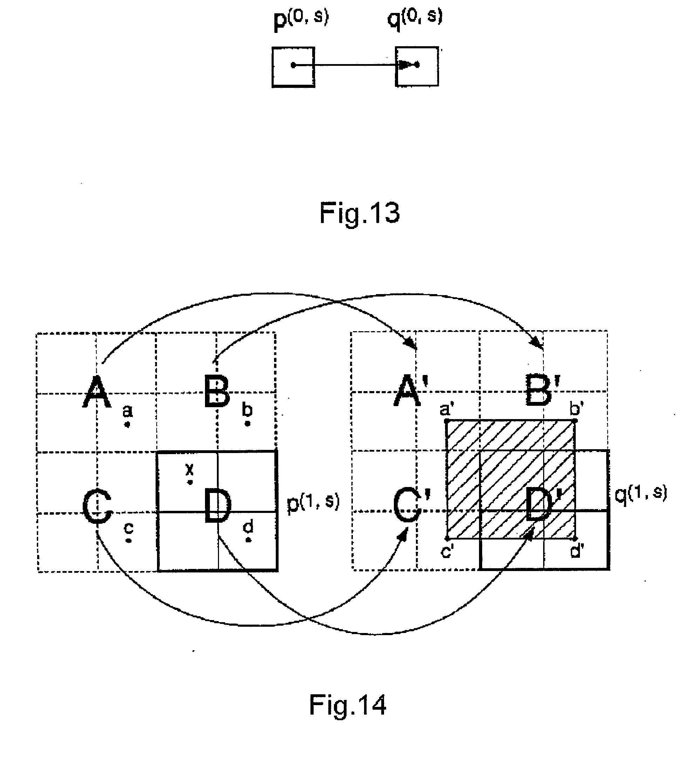

Fig. 13 is a diagram showing the way a submapping is determined at the 0-th level.

Fig. 14 is a diagram showing the way a submapping is determined at the first level.

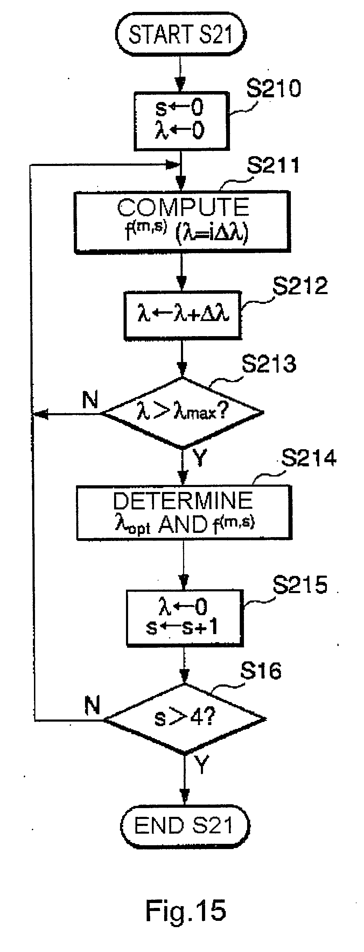

Fig. 15 is a flowchart showing the details of the process at S21 in Fig. 12.

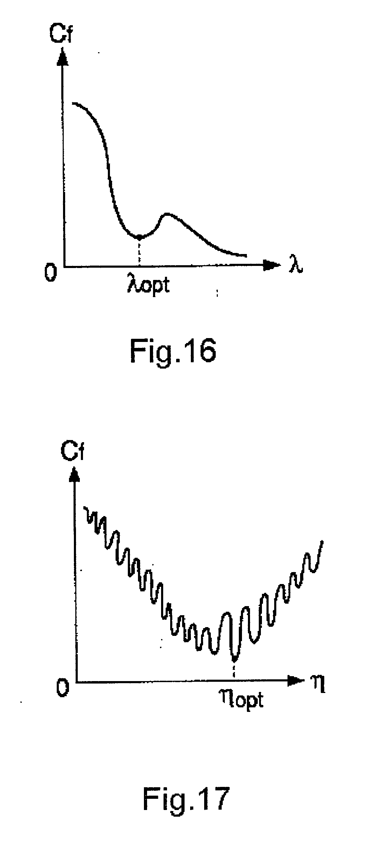

Fig. 16 is a graph showing the behavior of energy $C_f^{(m,s)}$ corresponding to $f^{(m,s)}$ ($\lambda = i\Delta\lambda$) which has been obtained for a certain $f^{(m,s)}$ while varying $\lambda$.

Fig. 17 is a diagram showing the behavior of energy $C_f^{(n)}$ corresponding to $f^{(n)}$ ($\eta = i\Delta\eta$) ($i = 0,1,...$) which has been obtained while varying $\eta$.

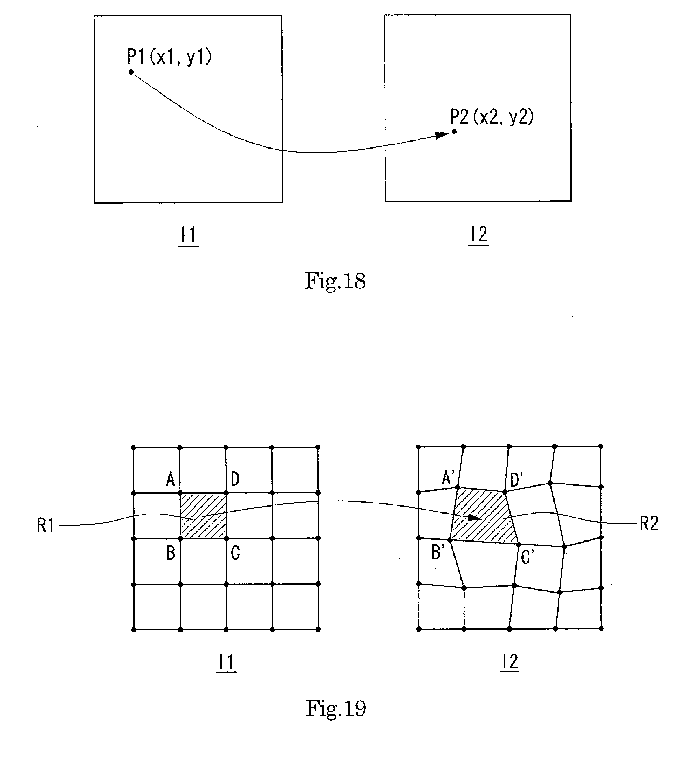

Fig. 18 shows how certain pixels correspond between the first image and the second image, in the first embodiment.

Fig. 19 shows a correspondence relation between a source polygon taken on the first image and a destination polygon taken on the second image.

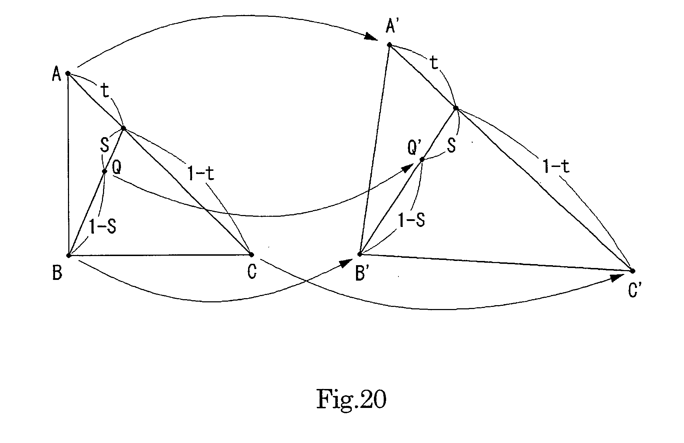

Fig. 20 shows a procedure by which to obtain points in the destination polygon corresponding to points in the source polygon.

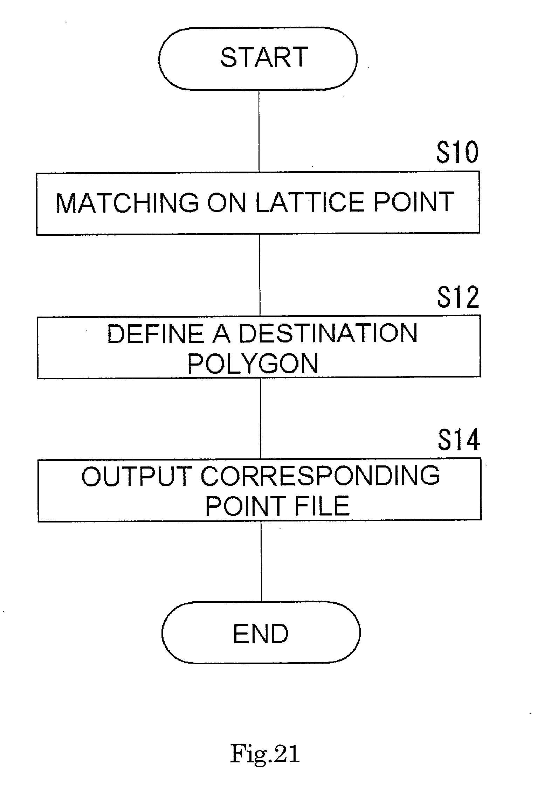

Fig. 21 is a flowchart showing a procedure for generating the corresponding point file according to the first embodiment.

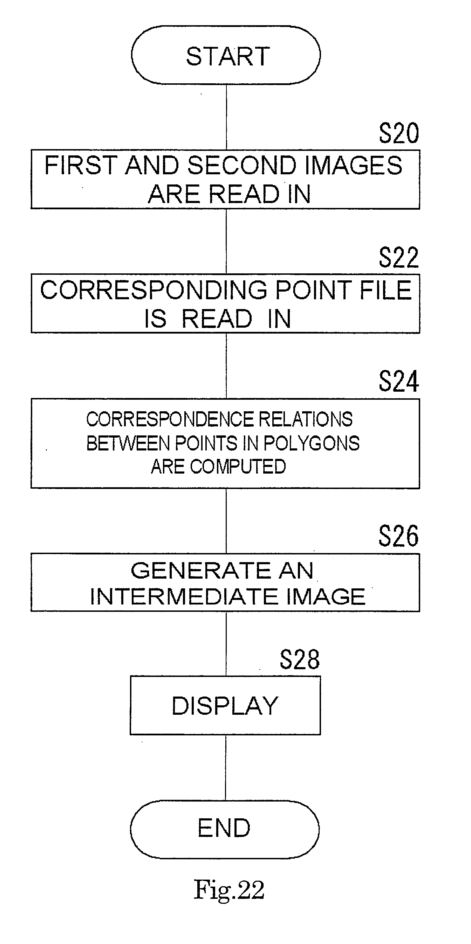

Fig. 22 is a flowchart showing a procedure for generating an intermediate image based on the corresponding point file, according to the first embodiment.

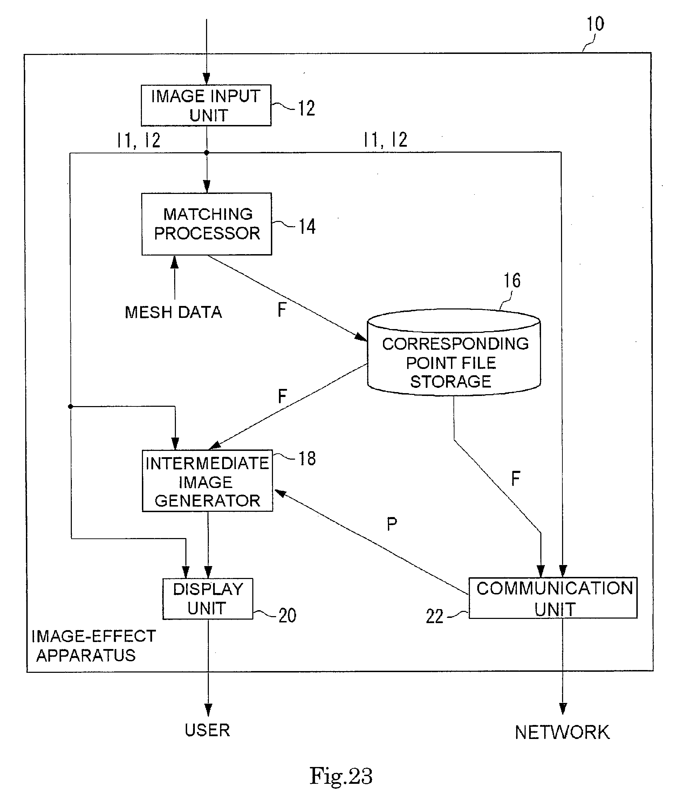

Fig. 23 shows a structure of an image processing apparatus according to the first embodiment.

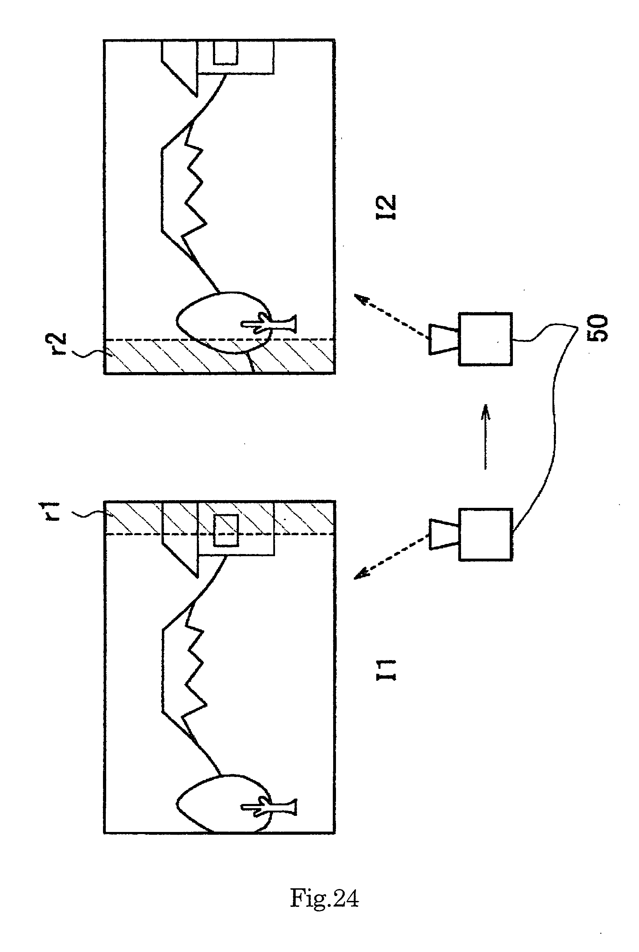

Fig. 24 illustrates a reason why an invalidated region, which is an object for consideration in the second embodiment, is caused.

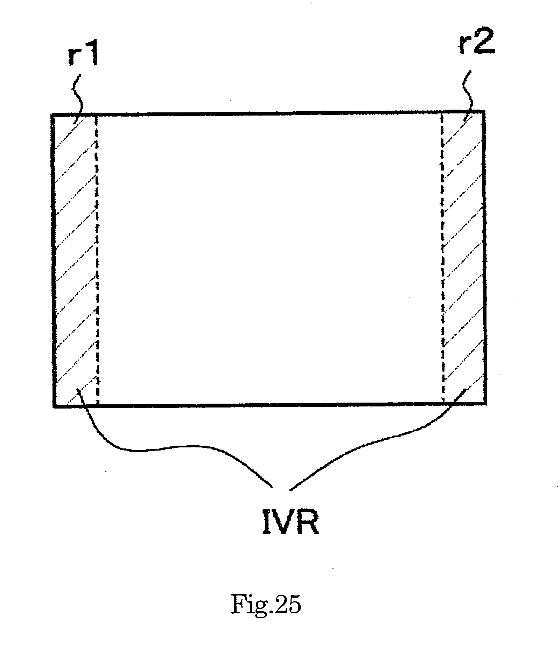

Fig. 25 shows the invalidated region IVR of the images shown in Fig. 24.

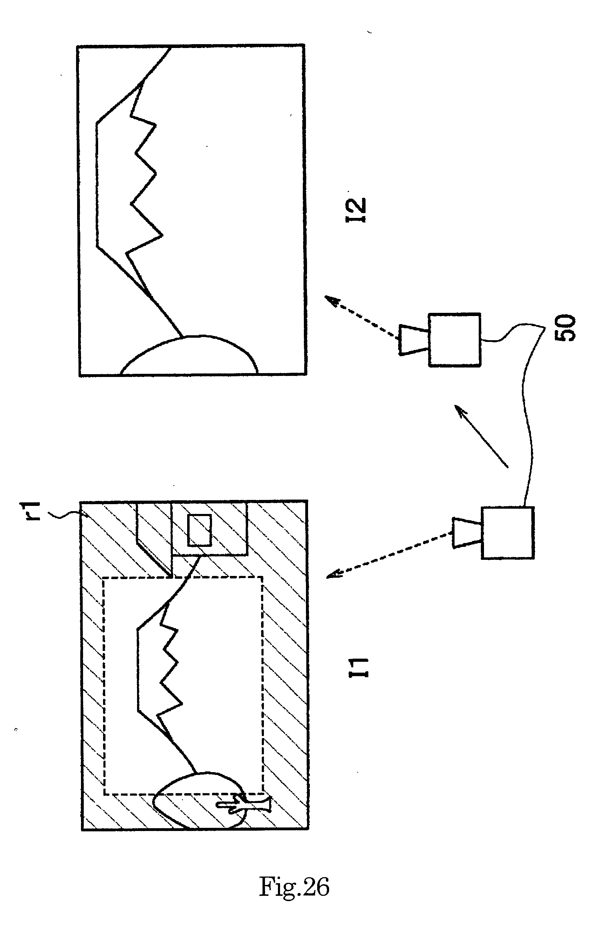

Fig. 26 illustrates another reason why an invalidated region, which is the object for consideration in the second embodiment, is caused.

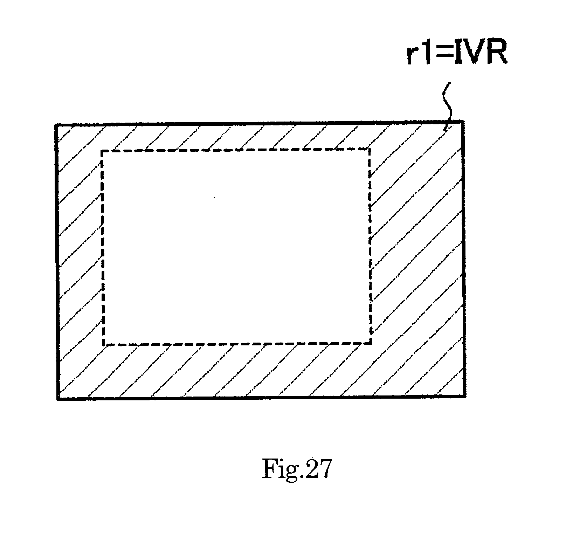

Fig. 27 shows the invalidated region IVR of the image shown in Fig. 26.

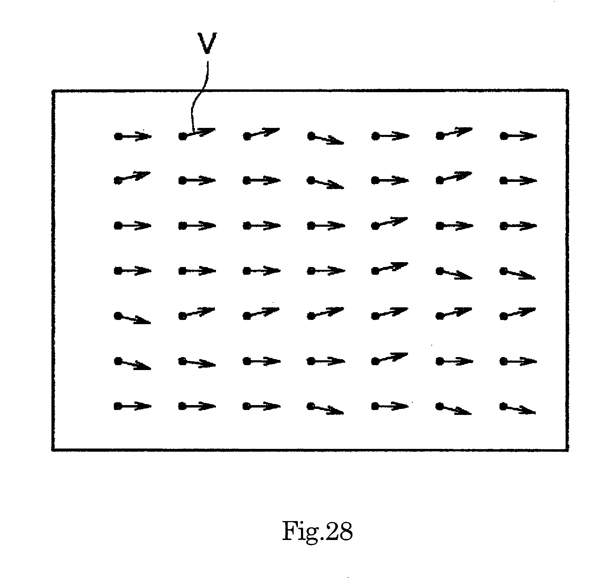

Fig. 28 shows motion vectors analyzed in the judging unit according to the second embodiment.

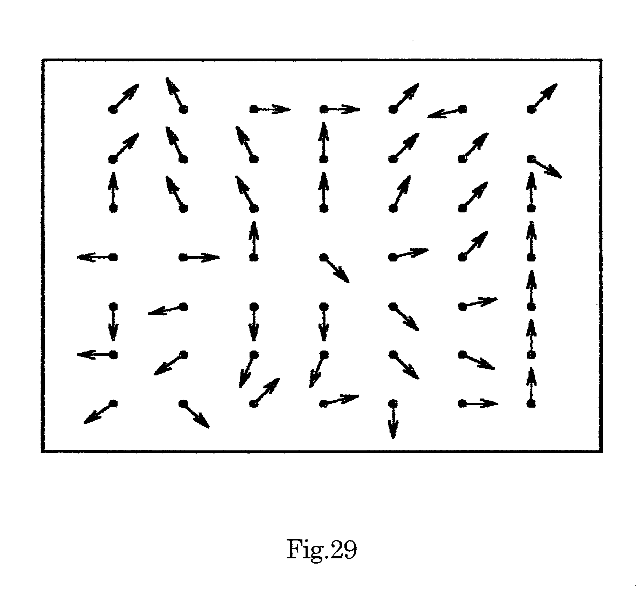

Fig. 29 shows another motion vectors analyzed in the judging unit according to the second embodiment.

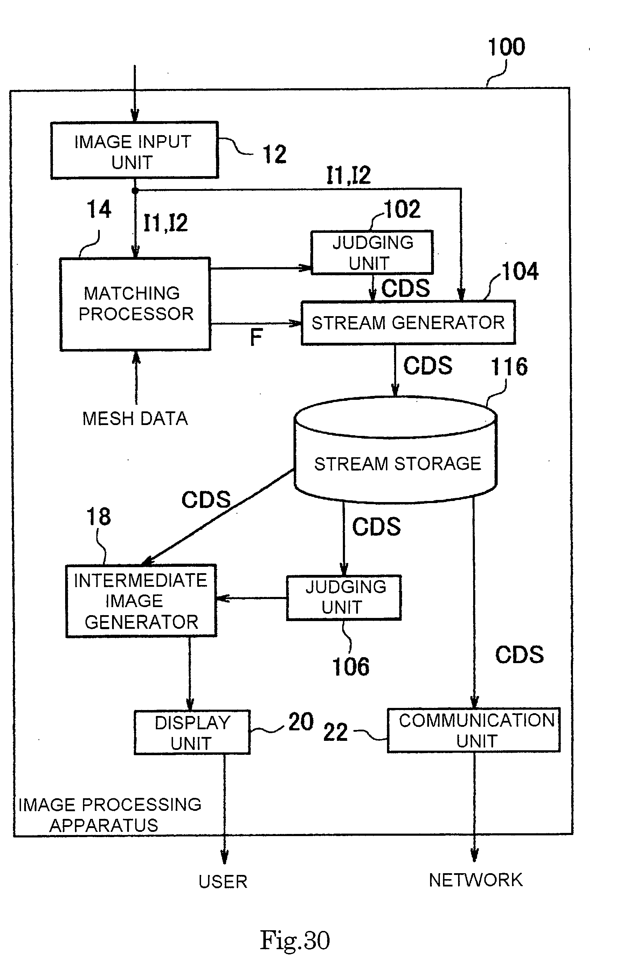

Fig. 30 shows a structure of an image processing apparatus according to the second embodiment.

The invention will now be described based on the preferred embodiments, which do not intend to limit the scope of the present invention, but exemplify the invention. All of the features and the combinations thereof described in the embodiment are not necessarily essential to the invention.

At first, the multiresolutional critical point filter technology and the image matching processing using the technology, both of which will be utilized in the preferred embodiments, will be described in detail as "Base Technology". Namely, the following sections of [1] and [2] belong to the base technology, where [1] describes elemental techniques and [2] describes a processing procedure. These techniques are patented under Japanese Patent No. 2927350 and owned by the same assignee of the present invention, and they realize an optimal achievement when combined with the present invention. However, it is to be noted that the image matching techniques which can be adopted in the present embodiments are not limited to this.

In Figs. 18 to 30, image data coding and decoding techniques utilizing the base technology will be described in a specific manner.

**Base Technology**

[1] Detailed description of elemental techniques

[1.1] Introduction

Using a set of new multiresolutional filters called critical point filters, image matching is accurately computed. There is no need for any prior knowledge concerning objects in question. The matching of the images is computed at each resolution while proceeding through the resolution hierarchy. The resolution hierarchy proceeds from a coarse level to a fine level. Parameters necessary for the computation are set completely automatically by dynamical computation analogous to human visual systems. Thus, There is no need to manually specify the correspondence of points between the images.

The base technology can be applied to, for instance, completely automated morphing, object recognition, stereo photogrammetry, volume rendering, smooth generation of motion images from a small number of frames. When applied to the morphing, given images can be automatically transformed. When applied to the volume rendering, intermediate images between cross sections can be accurately reconstructed, even when the distance between them is rather long and the cross sections vary widely in shape.

[1.2] The hierarchy of the critical point filters

The multiresolutional filters according to the base technology can preserve the intensity and locations of each critical point included in the images while reducing the resolution. Now, let the width of the image be N and the height of the image be M. For simplicity, assume that N=M=2n where n is a positive integer. An interval $[0, N] \subset R$ is denoted by I. A pixel of the image at position (i, j) is denoted by $p^{(i,j)}$ where $i,j \in I$.

Here, a multiresolutional hierarchy is introduced. Hierarchized image groups are produced by a multiresolutional filter. The multiresolutional filter carries out a two dimensional search on an original image and detects critical points therefrom. The multiresolutinal filter then extracts the critical points from the original image to construct another image having a lower resolution. Here, the size of each of the respective images of the m-th level is denoted as $2^m \times 2^m$ ($0 \leq m \leq n$). A critical point filter constructs the following four new hierarchical images recursively, in the direction descending from n.

$$p_{(i,j)}^{(m,0)} = \min(\min(p_{(2i,2j)}^{(m+1,0)}, p_{(2i,2j+1)}^{(m+1,0)}), \min(p_{(2i+1,2j)}^{(m+1,0)}, p_{(2i+1,2j+1)}^{(m+1,0)}))$$

$$p_{(i,j)}^{(m,1)} = \max(\min(p_{(2i,2j)}^{(m+1,1)}, p_{(2i,2j+1)}^{(m+1,1)}), \min(p_{(2i+1,2j)}^{(m+1,1)}, p_{(2i+1,2j+1)}^{(m+1,1)}))$$

$$p_{(i,j)}^{(m,2)} = \min(\max(p_{(2i,2j)}^{(m+1,2)}, p_{(2i,2j+1)}^{(m+1,2)}), \max(p_{(2i+1,2j)}^{(m+1,2)}, p_{(2i+1,2j+1)}^{(m+1,2)}))$$

$$p_{(i,j)}^{(m,3)} = \max(\max(p_{(2i,2j)}^{(m+1,3)}, p_{(2i,2j+1)}^{(m+1,3)}), \max(p_{(2i+1,2j)}^{(m+1,3)}, p_{(2i+1,2j+1)}^{(m+1,3)}))$$

$$--- \quad (1)$$

where let

$$p_{(i,j)}^{(n,0)} = p_{(i,j)}^{(n,1)} = p_{(i,j)}^{(n,2)} = p_{(i,j)}^{(n,3)} = p_{(i,j)} \qquad (2)$$

The above four images are referred to as subimages hereinafter. When $\min_{x \leq t \leq x+1}$ and $\max_{x \leq t \leq x+1}$ are abbreviated to and $\alpha$ and $\beta$, respectively, the subimages can be expressed as follows.

$$P^{(m,0)} = \alpha(x)\alpha(y)p^{(m+1,0)}$$

$$P^{(m,1)} = \alpha(x)\beta(y)p^{(m+1,1)}$$

$$P^{(m,2)} = \beta(x)\alpha(y)p^{(m+1,2)}$$

$$P^{(m,2)} = \beta(x)\beta(y)p^{(m+1,3)}$$

Namely, they can be considered analogous to the tensor products of $\alpha$ and $\beta$. The subimages correspond to the respective critical points. As is apparent from the above equations, the critical point filter detects a critical point of the original image for every block consisting of 2 X 2 pixels. In this detection, a point having a maximum pixel value and a point having a minimum pixel value are searched with respect to two directions, namely, vertical and horizontal directions, in each block. Although pixel intensity is used as a pixel value in this base technology, various other values relating to the image may be used. A pixel having the maximum pixel values for the two directions, one having minimum pixel values for the two directions, and one having a minimum pixel value for one direction and a maximum pixel value for the other direction are detected as a local maximum point, a local minimum point, and a saddle point, respectively.

By using the critical point filter, an image (1 pixel here) of a critical point detected inside each of the respective blocks serves to represent its block image (4 pixels here). Thus, resolution of the image is reduced. From a singularity theoretical point of view, $\alpha(x)\alpha(y)$ preserves the local minimum point(minima point), $\beta(x)\beta(y)$ preserves the local maximum point(maxima point), $\alpha(x)\beta(y)$ and $\beta(x)\alpha(y)$ preserve the saddle point.

At the beginning, a critical point filtering process is applied separately to a source image and a destination image which are to be matching-computed. Thus, a series of image groups, namely, source hierarchical images and destination hierarchical images are generated. Four source hierarchical images and four destination hierarchical images are generated corresponding to the types of the critical points.

Thereafter, the source hierarchical images and the destination hierarchical images are matched in a series of the resolution levels. First, the minima points are matched using $p^{(m,0)}$. Next, the saddle points are matched using $p^{(m,1)}$ based on the previous matching result for the minima points. Other saddle points are matched using $p^{(m,2)}$. Finally, the maxima points are matched using $p^{(m,3)}$.

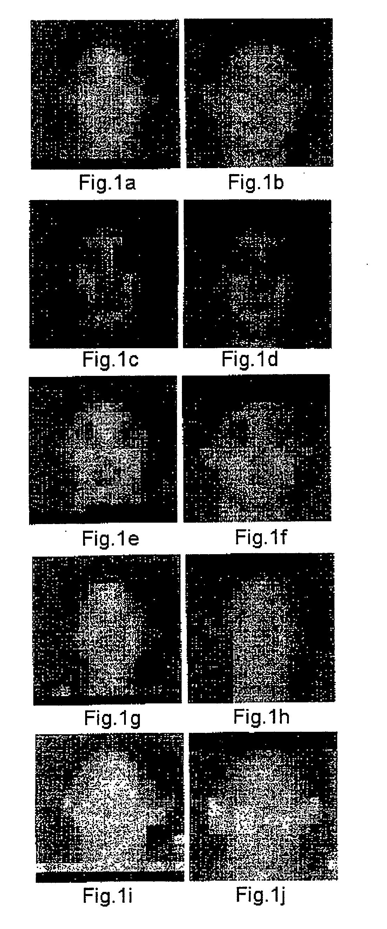

Figs. 1(c) and 1(d) show the subimages $p^{(5,0)}$ of the images in Figs. 1(a) and 1(b), respectively. Similarly, Figs. 1(e) and 1(f) show the subimages $p^{(5,1)}$. Figs. 1(g) and 1(h) show the subimages $p^{(5,2)}$. Figs. 1(i) and 1(j) show the subimages $p^{(5,3)}$. Characteristic parts in the images can be easily matched using subimages. The eyes can be matched by $p^{(5,0)}$ since the eyes are the minima points of pixel intensity in a face. The mouths can be matched by $p^{(5,1)}$ since the mouths have low intensity in the horizontal direction. Vertical lines on the both sides of the necks become clear by $p^{(5,2)}$. The ears and bright parts of cheeks become clear by $p^{(5,3)}$ since these are the maxima points of pixel intensity.

As described above, the characteristics of an image can be extracted by the critical point filter. Thus, by comparing, for example, the characteristics of an image shot by a camera and with the characteristics of several objects recorded in advance, an object shot by the camera can be identified.

[1.3] Computation of mapping between images

The pixel of the source image at the location (i,j) is denoted by $p^{(n)}_{(i,j)}$ and that of the destination image at (k, 1) is denoted by $q^{(n)}_{(k,l)}$ where i, j, k, l $\in$ I. The energy of the mapping between the images (described later) is then defined. This energy is determined by the difference in the intensity of the pixel of the source image and its corresponding pixel of the destination image and the smoothness of the mapping. First, the mapping $f^{(m,0)}:p^{(m,0)} \rightarrow q^{(m,0)}$ between $p^{(m,0)}$ and $q^{(m,0)}$ with the minimum energy is computed. Based on $f^{(m,0)}$, the mapping $f^{(m,1)}$ between $p^{(m,1)}$ and $q^{(m,1)}$ with the minimum energy is computed. This process continues until $f^{(m,3)}$ between $p^{(m,3)}$ and $q^{(m,3)}$ is computed. Each $f^{(m,i)}$ (i = 0,1,2,...) is referred to as a submapping. The order of i will be rearranged as shown in the following (3) in computing $f^{(m,i)}$ for the reasons to be described later.

$$f^{(m,i)} : p^{(m,\sigma(i))} \rightarrow q^{(m,\sigma(i))} \tag{3}$$

where $\sigma(i) \in \{0,1,2,3\}$.

[1. 3. 1] Bijectivity

When the matching between a source image and a destination image is expressed by means of a mapping, that mapping shall satisfy the Bijectivity Conditions (BC) between the two images (note that a one-to-one surjective mapping is called a bijection). This is because the respective images should be connected satisfying both surjection and injection, and there is no conceptual supremacy existing between these images. It is to be to be noted that the mappings to be constructed here are the digital version of the bijection. In the base technology, a pixel is specified by a grid point.

The mapping of the source subimage (a subimage of a source image) to the destination subimage (a subimage of a destination image) is represented by $f^{(m,s)} : I/2^{n-m} \times I/2^{n-m} \rightarrow I/2^{n-m} \times I/2^{n-m}$ (s = 0,1,...), where $f^{(m,s)}_{(i,j)} = (k,l)$ means that $p^{(m,s)}_{(i,j)}$ of the source image is mapped to $q^{(m,s)}_{(k,l)}$ of the destination image. For simplicity, when $f_{(i,j)}=(k,l)$ holds, a pixel $q^{(k,l)}_{(k,l)}$ is denoted by $q_{f(i,j)}$.

When the data sets are discrete as image pixels (grid points) treated in the base technology, the definition of bijectivity is important. Here, the bijection will be defined in the following manner, where i,i',j,j',k and l are all integers. First, each square region (4)

$$p^{(m,s)}_{(i,j)} p^{(m,s)}_{(i+1,j)} p^{(m,s)}_{p(i+1,j+1)} p^{(m,s)}_{(i,j+1)} \tag{4}$$

on the source image plane denoted by R is considered, where i = 0, ..., $2^m-1$, and j = 0, ..., $2^m-1$. The edges of R are directed as follows.

$$\overrightarrow{p^{(m,s)}_{(i,j)} p^{(m,s)}_{(i+1,j)}}, \overrightarrow{p^{(m,s)}_{(i+1,j)} p^{(m,s)}_{(i+1,j+1)}}, \overrightarrow{p^{(m,s)}_{(i+1,j+1)} p^{(m,s)}_{(i,j+1)}} \text{ and } \overrightarrow{p^{(m,s)}_{(i,j+1)} p^{(m,s)}_{(i,j)}} \quad --- \quad (5)$$

This square will be mapped by f to a quadrilateral on the destination image plane. The quadrilateral (6)

$$q_{(i,j)}^{(m,s)} q_{(i+1,j)}^{(m,s)} q_{(i+1,j+1)}^{(m,s)} q_{(i,j+1)}^{(m,s)} \tag{6}$$

denoted by $f^{(m,s)}$ (R) should satisfy the following bijectivity conditions(BC).

$$(\text{So, } f^{(m,s)}(R) = f^{(m,s)} p_{(i,j)}^{(m,s)} p_{(i+1,j)}^{(m,s)} p_{(i+1,j+1)}^{(m,s)} p_{(i,j+1)}^{(m,s)} = q_{(i,j)}^{(m,s)} q_{(i+1,j)}^{(m,s)} q_{(i+1,j+1)}^{(m,s)} q_{(i,j+1)}^{(m,s)} )$$

1. The edges of the quadrilateral $f^{(m,s)}$(R) should not intersect one another.
2. The orientation of the edges of $f^{(m,s)}$(R) should be the same as that of R (clockwise in the case of Fig. 2).
3. As a relaxed condition, retraction mapping is allowed.

The bijectivity conditions stated above shall be simply referred to as BC hereinafter.
Without a certain type of a relaxed condition, there would be no mappings which completely satisfy the BC other than a trivial identity mapping. Here, the length of a single edge of $f^{(m,s)}$ (R) may be zero. Namely, $f^{(m,s)}$ (R) may be a triangle. However, it is not allowed to be a point or a line segment having area zero. Specifically speaking, if Fig. 2(R) is the original quadrilateral, Figs. 2(A) and 2(D) satisfy BC while Figs 2(B), 2(C) and 2(E) do not satisfy BC.
In actual implementation, the following condition may be further imposed to easily guarantee that the mapping is surjective. Namely, each pixel on the boundary of the source image is mapped to the pixel that occupies the same locations at the destination image. In other words, f(i,j)=(i,j) (on the four lines of i=0, i=2m-1, j=0, j=2m-1). This condition will be hereinafter referred to as an additional condition.

[1. 3. 2] Energy of mapping

[1. 3. 2. 1] Cost related to the pixel intensity

The energy of the mapping f is defined. An objective here is to search a mapping whose energy becomes minimum. The energy is determined mainly by the difference in the intensity of between the pixel of the source image and its corresponding pixel of the destination image. Namely, the energy $C_{(i,j)}^{(m,s)}$ of the mapping $f^{(m,s)}$ at (i,j) is determined by the following equation (7).

$$C_{(i,j)}^{(m,s)} = |V(p_{(i,j)}^{(m,s)}\text{-}V(q_{f(i,j)}^{(m,s)})|^2 \tag{7}$$

where $V(p_{(i,j)}^{(m,s)})$ and $V(q_{f(i,j)}^{(m,s)})$ are the intensity values of the pixels $p_{(i,j)}^{(m,s)}$ and $q_{f(i,j)}^{(m,s)}$, respectively. The total energy $C^{(m,s)}$ of f is a matching evaluation equation, and can be defined as the sum of $C_{(i,j)}^{(m,s)}$ as shown in the following equation (8).

$$C_f^{(m,s)} = \sum_{i=0}^{i=2^m-1} \sum_{j=0}^{j=2^m-1} C_{(i,j)}^{(m,s)} \qquad --- \quad (8)$$

[1. 3. 2. 2] Cost related to the locations of the pixel for smooth mapping

In order to obtain smooth mappings, another energy $D_f$ for the mapping is introduced. The energy $D_f$ is determined by the locations of $p_{(i,j)}^{(m,s)}$ and $q_{f(i,j)}^{(m,s)}$ (i=0,1,..., 2m-1, j=0,1,..., 2m-1), regardless of the intensity of the pixels. The energy $D_{(i,j)}^{(m,s)}$ of the mapping $f^{(m,s)}$ at a point (i,j) is determined by the following equation (9).

$$D_{(i,j)}^{(m,s)} = \eta E_{0(i,j)}^{(m,s)} + E_{1(i,j)}^{(m,s)} \tag{9}$$

where the coefficient parameter η which is equal to or greater than 0 is a real number. And we have

$$E_{0(i,j)}^{(m,s)} = \left\| (i,j) - f^{(m,s)}(i,j) \right\|^2 \qquad --- \quad (10)$$

$$E_{1(i,j)}^{(m,s)} = \sum_{i'=i-1}^{i} \sum_{j'=j-1}^{j} \left\| (f^{(m,s)}(i,j) - (i,j)) - (f^{(m,s)}(i',j') - (i',j')) \right\|^2 / 4 \quad ---$$

(11)

where

$$\|(x,y)\| = \sqrt{x^2 + y^2} \qquad\qquad 12$$

and f(i',j') is defined to be zero for i'<0 and j'<0. $E_0$ is determined by the distance between (i,j) and f(i,j). $E_0$ prevents a pixel from being mapped to a pixel too far away from it. However, $E_0$ will be replaced later by another energy function. $E_1$ ensures the smoothness of the mapping. $E_1$ represents a distance between the displacement of p(i,j) and the displacement of its neighboring points. Based on the above consideration, another evaluation equation for evaluating the matching, or the energy $D_f$ is determined by the following equation (13).

$$D_f^{(m,s)} = \sum_{i=0}^{i=2^m-1} \sum_{j=0}^{j=2^m-1} D_{(i,j)}^{(m,s)} \qquad --- \quad (13)$$

[1. 3. 2. 3] Total energy of the mapping

The total energy of the mapping, that is, a combined evaluation equation which relates to the combination of a plurality of evaluations, is defined as $\lambda C_{(i,j)}^{(m,s)} + D_f^{(m,s)}$, where $\lambda \geqq 0$ is a real number. The goal is to detect a state in which the combined evaluation equation has an extreme value, namely, to find a mapping which gives the minimum energy expressed by the following (14).

$$\min_f \{ \lambda C_f^{(m,s)} + D_f^{(m,s)} \} \qquad --- \quad (14)$$

Care must be exercised in that the mapping becomes an identity mapping if $\lambda=0$ and $\eta=0$ (i.e., $f^{(m,s)}(i,j)=(i,j)$ for all $i=0,1,...,2^m-1$ and $j=0,1,...,2^m-1$). As will be described later, the mapping can be gradually modified or transformed from an identity mapping since the case of $\lambda=0$ and $\eta=0$ is evaluated at the outset in the base technology. If the combined evaluation equation is defined as $C_f^{(m,s)} + \lambda D_f^{(m,s)}$ where the original position of $\lambda$ is changed as such, the equation with $\lambda=0$ and $\eta=0$ will be $C_f^{(m,s)}$ only. As a result thereof, pixels would be randomly corresponded to each other only because their pixel intensities are close, thus making the mapping totally meaningless. Transforming the mapping based on such a meaningless mapping makes no sense. Thus, the coefficient parameter is so determined that the identity mapping is initially selected for the evaluation as the best mapping.

Similar to this base technology, the difference in the pixel intensity and smoothness is considered in the optical flow technique. However, the optical flow technique cannot be used for image transformation since the optical flow technique takes into account only the local movement of an object. Global correspondence can be detected by utilizing the critical point filter according to the base technology.

[1. 3. 3] Determining the mapping with multiresolution

A mapping $f_{min}$ which gives the minimum energy and satisfies the BC is searched by using the multiresolution hierarchy. The mapping between the source subimage and the destination subimage at each level of the resolution is computed. Starting from the top of the resolution hierarchy (i.e., the coarsest level), the mapping is determined at each resolution level, while mappings at other level is being considered. The number of candidate mappings at each level is restricted by using the mappings at an upper (i.e., coarser) level of the hierarchy. More specifically speaking, in the course of determining a mapping at a certain level, the mapping obtained at the coarser level by one is imposed as a sort of constraint conditions.

Now, when the following equation (15) holds,

$$(i', j') = (\left\lfloor \frac{i}{2} \right\rfloor, \left\lfloor \frac{j}{2} \right\rfloor) \qquad --- \quad (15)$$

$p^{(m-1,s)}_{(i',j')}$ and $q^{(m-1,s)}_{(i',j')}$ are respectively called the parents of $p^{(m,s)}_{(i,j)}$ and $q^{(m,s)}_{(i,j)}$, where $\lfloor x \rfloor$ denotes the largest integer not exceeding x. Conversely, $p^{(m,s)}_{(i,j)}$ and $q^{(m,s)}_{(i,j)}$ are the child of $p^{(m-1,s)}_{(i',j')}$ and the child of $q^{(m-1,s)}_{(i',j')}$, respectively. A function parent(i,j) is defined by the following (16).

$$parent(i, j) = (\left\lfloor \frac{i}{2} \right\rfloor, \left\lfloor \frac{j}{2} \right\rfloor) \qquad --- \quad (16)$$

A mapping between $p^{(m,s)}_{(i,j)}$ and $q^{(m,s)}_{(k,l)}$ is determined by computing the energy and finding the minimum thereof. The value of f(m,s)(i,j)=(k,l) is determined as follows using f(m-1,s) (m=1,2,...,n). First of all, imposed is a condition that $q^{(m,s)}_{(k,l)}$ should lie inside a quadrilateral defined by the following (17) and (18). Then, the applicable mappings are narrowed down by selecting ones that are thought to be reasonable or natural among them satisfying the BC.

$$q^{(m,s)}_{g(m,s)(i-1,j-1)} q^{(m,s)}_{g(m,s)(i-1,j+1)} q^{(m,s)}_{g(m,s)(i+1,j+1)} q^{(m,s)}_{g(m,s)(i+1,j-1)} \qquad\qquad (17)$$

where

$$g^{(m,s)}(i,j) = f^{(m-1,s)}(parent(i,j)) + f^{(m-1,s)}(parent(i, j) + (1,1)) \qquad\qquad (18)$$

The quadrilateral defined above is hereinafter referred to as the inherited quadrilateral of $p^{(m,s)}_{(i,j)}$ The pixel minimizing the energy is sought and obtained inside the inherited quadrilateral.

Fig. 3 illustrates the above-described procedures. The pixels A, B, C and D of the source image are mapped to A', B', C' and D' of the destination image, respectively, at the (m-1)th level in the hierarchy. The pixel $p^{(m,s)}_{(i,j)}$ should be mapped to the pixel $q^{(m,s)}_{(m)(i,j)}$ which exists inside the inherited quadrilateral A'B'C'D'. Thereby, bridging from the mapping at the (m-1)th level to the mapping at the m-th level is achieved.

The energy $E_0$ defined above is now replaced by the following (19) and (20)

$$E_{0(i,j)} = \left\| f^{(m,0)}(i, j) - g^{(m)}(i, j) \right\|^2 \qquad --- \quad (19)$$

$$E_{0(i,j)} = \left\| f^{(m,s)}(i, j) - f^{(m,s-1)}(i, j) \right\|^2, (1 \leq i) \qquad --- \quad (20)$$

for computing the submapping f(m,0) and the submapping f(m,s) at the m-th level, respectively.

In this manner, a mapping which keeps low the energy of all the submappings is obtained. Using the equation (20) makes the submappings corresponding to the different critical points associated to each other within the same level in order that the subimages can have high similarity. The equation (19) represents the distance between f(m,s) (i, j) and the location where (i,j) should be mapped when regarded as a part of a pixel at the (m-1)the level.

When there is no pixel satisfying the BC inside the inherited quadrilateral A'B'C'D', the following steps are taken. First, pixels whose distance from the boundary of A'B'C'D' is L (at first, L=1) are examined. If a pixel whose energy is the minimum among them satisfies the BC, then this pixel will be selected as a value of f(m,s)(i,j). L is increased until such a pixel is found or L reaches its upper bound $L^{(m)}_{max}$. $L^{(m)}_{max}$ is fixed for each level m. If no such a pixel is found at all, the third condition of the BC is ignored temporarily and such mappings that caused the area of the transformed quadrilateral to become zero (a point or a line) will be permitted so as to determine $f^{(m,s)}$ (i,j). If such a pixel is still not found, then the first and the second conditions of the BC will be removed.

Multiresolution approximation is essential to determining the global correspondence of the images while preventing the mapping from being affected by small details of the images. Without the multiresolution approximation, it is impossible to detect a correspondence between pixels whose distances are large. In the case where the multiresolution approximation is not available, the size of an image will be limited to the very small one, and only tiny changes in the images can be handled. Moreover, imposing smoothness on the mapping usually makes it difficult to find the correspondence of such pixels. That is because the energy of the mapping from one pixel to another pixel which is far therefrom is high. On the other hand, the multiresolution approximation enables finding the approximate correspondence of such pixels. This is because the distance between the pixels is small at the upper (coarser) level of the hierarchy of the resolution.

[1. 4] Automatic determination of the optimal parameter values

One of the main deficiencies of the existing image matching techniques lies in the difficulty of parameter adjustment. In most cases, the parameter adjustment is performed manually and it is extremely difficult to select the optical value. However, according to the base technology, the optimal parameter values can be obtained completely automatically.

The systems according to this base technology includes two parameters, namely, $\lambda$ and $\eta$, where $\lambda$ and $\eta$ represent the weight of the difference of the pixel intensity and the stiffness of the mapping, respectively. The initial value for these parameters are 0. First, $\lambda$ is gradually increased from $\lambda=0$ while $\eta$ is fixed to 0. As $\lambda$ becomes larger and the value of the combined evaluation equation (equation (14)) is minimized, the value of $C^{(m,s)}_f$ for each submapping generally becomes smaller. This basically means that the two images are matched better. However, if $\lambda$ exceeds the optimal value, the following phenomena (1 - 4) are caused.

1. Pixels which should not be corresponded are erroneously corresponded only because their intensities are close.
2. As a result, correspondence between images becomes inaccurate, and the mapping becomes invalid.
3. As a result, $D^{(m,s)}_f$ in the equation 14 tends to increase abruptly.
4. As a result, since the value of the equation 14 tends to increase abruptly, $f^{(m,s)}$ changes in order to suppress the abrupt increase of $D^{(m,s)}_f$. As a result, $C^{(m,s)}_f$. increases.

Therefore, a threshold value at which $C^{(m,s)}_f$ turns to an increase from a decrease is detected while a state in which the equation (14) takes the minimum value with $\lambda$ being increased is kept. Such $\lambda$ is determined as the optimal value at $\eta=0$. Then, the behavior of $C^{(m,s)}_f$ is examined while $\eta$ is increased gradually, and $\eta$ will be automatically determined by a method described later. $\lambda$ will be determined corresponding to such the automatically determined $\eta$.

The above-described method resembles the focusing mechanism of human visual systems. In the human visual systems, the images of the respective right eye and left eye are matched while moving one eye. When the objects are clearly recognized, the moving eye is fixed.

[1. 4. 1] Dynamic determination of $\lambda$

$\lambda$ is increased from 0 at a certain interval, and the a subimage is evaluated each time the value of $\lambda$ changes. As shown in the equation (14), the total energy is defined by $\lambda C^{(m,s)}_f + D^{(m,s)}_f$. $D^{(m,s)}_f$ in the equation (9) represents the smoothness and theoretically becomes minimum when it is the identity mapping. $E_0^{(i,j)}$ and $E_1$ increase as the mapping is further distorted. Since $E_1$ is an integer, 1 is the smallest step of $D^{(m,s)}_f$. Thus, that changing the mapping reduces the total energy is impossible unless a changed amount (reduction amount) of the current $\lambda C^{(m,s)}_f$ is equal to or greater than 1. Since $D^{(m,s)}_f$ increases by more than 1 accompanied by the change of the mapping, the total energy is not reduced unless $\lambda C^{(m,s)}_{(i,j)}$ is reduced by more than 1.

Under this condition, it is shown that $C^{(m,s)}_{(i,j)}$ decreases in normal cases as $\lambda$ increases. The histogram of $C^{(m,s)}_{(i,j)}$ is denoted as h(l), where h(l) is the number of pixels whose energy $C^{(m,s)}_{(i,j)}$ is $l^2$. In order that $\lambda l^2 \geqq 1$, for example, the case of $l^2=1/\lambda$ is considered. When $\lambda$ varies from $\lambda_1$ to $\lambda_2$, a number of pixels (denoted A) expressed by the following (21)

$$A = \sum_{l=\left\lceil\frac{1}{\lambda_2}\right\rceil}^{\left\lfloor\frac{1}{\lambda_1}\right\rfloor} h(l) \cong \int_{l=\frac{1}{\lambda_2}}^{\frac{1}{\lambda_1}} h(l)dl = -\int_{\lambda_2}^{\lambda_1} h(l)\frac{1}{\lambda^{3/2}}d\lambda = \int_{\lambda_1}^{\lambda_2}\frac{h(l)}{\lambda^{3/2}}d\lambda \qquad ---\ (21)$$

changes to a more stable state having the energy (22) which is

$$C_f^{(m,s)} - l^2 = C_f^{(m,s)} - \frac{1}{\lambda}. \tag{22}$$

Here, it is assumed that all the energy of these pixels is approximated to be zero. It means that the value of $C_{(i,j)}^{(m,s)}$ changes by (23).

$$\partial C_f^{(m,s)} = -\frac{A}{\lambda} \tag{23}$$

As a result, the equation (24) holds.

$$\frac{\partial C_f^{(m,s)}}{\partial \lambda} = \frac{h(l)}{\lambda^{5/2}} \tag{24}$$

Since h(l)>0 , $C_f^{(m,s)}$ decreases in normal case. However, when $\lambda$ tends to exceed the optimal value, the above phenomenon that is characterized by the increase in $C_f^{(m,s)}$ occurs. The optimal value of $\lambda$ is determined by detecting this phenomenon.  When

$$h(l) = Hl^k = \frac{H}{\lambda^{\lambda/2}} \tag{25}$$

is assumed where both H(h>0) and k are constants, the equation (26) holds.

$$\frac{\partial C_f^{(m,s)}}{\partial \lambda} = -\frac{H}{\lambda^{5/2+k/2}} \tag{26}$$

Then, if k≠-3, the following (27) holds.

$$C_f^{(m,s)} = C + \frac{H}{(3/2+k/2)\lambda^{3/2+k/2}} \tag{27}$$

The equation (27) is a general equation of $C_f^{(m,s)}$ (where C is a constant).
When detecting the optimal value of $\lambda$, the number of pixels violating the BC may be examined for safety. In the course of determining a mapping for each pixel, the probability of violating the BC is assumed $p_0$ here. In that case, since

$$\frac{\partial A}{\partial \lambda} = \frac{h(l)}{\lambda^{3/2}} \tag{28}$$

holds, the number of pixels violating the BC increases at a rate of the equation (29).

$$B_0 = \frac{h(l)p_0}{\lambda^{3/2}} \qquad (29)$$

Thus,

$$\frac{B_0\lambda^{3/2}}{P_0 h(l)} = 1 \qquad (30)$$

is a constant. If assumed that $h(l)=Hl^k$, the following (31), for example,

$$B_0\lambda^{3/2+k/2} = p_0 H \qquad (31)$$

becomes a constant. However, when $\lambda$ exceeds the optimal value, the above value of (31) increases abruptly. By detecting this phenomenon, whether or not the value of $B_0\lambda^{3/2+k/2}/2^m$ exceeds an abnormal value $B_{0thres}$ exceeds is inspected, so that the optimal value of can be determined. Similarly, whether or not the value of $B_1\lambda^{3/2+k/2}/2^m$ exceeds an abnormal value $B_{1thres}$, so that the increasing rate $B_1$ of pixels violating the third condition of the BC is checked. The reason why the fact $2^m$ is introduced here will be described at a later stage. This system is not sensitive to the two threshold values $B_{0thres}$ and $B_{1thres}$. The two threshold values $B_{0thres}$ and $B_{1thres}$ can be used to detect the excessive distortion of the mapping which is failed to be detected through the observation of the energy $C_f^{(m,s)}$.

In the experimentation, the computation of $f^{(m,s)}$ is stopped and then the computation of $f^{(m,s+1)}$ is started when $\lambda$ exceeded 0.1. That is because the computation of submappings is affected by the difference of mere 3 out of 255 levels in the pixel intensity when $\lambda > 0.1$, and it is difficult to obtain a correct result when $\lambda > 0.1$.

[1. 4. 2] Histogram h(l)

The examination of $C_f^{(m,s)}$ does not depend on the histogram h(l). The examination of the BC and its third condition may be affected by the h(l). k is usually close to 1 when $(\lambda, C_f^{(m,s)})$ is actually plotted. In the experiment, k=1 is used, that is, $B_0\lambda^2$ and $B_1\lambda^2$ are examined. If the true value of k is less than 1, $B_0\lambda^2$ and $B_1\lambda^2$ does not become constants and increase gradually by the factor of $\lambda^{(1-k)/2}$. If h(l) is a constant, the factor is, for example, $\lambda^{1/2}$. However, such a difference can be absorbed by setting the threshold $B_{0thres}$ appropriately.

Let us model the source image by a circular object with its center at $(x_0,y_0)$ and its radius r, given by:

$$p(i, j) = \begin{cases} \dfrac{255}{r} c(\sqrt{(i-x_0)^2 + (j-y_0)^2})...(\sqrt{(i-x_0)^2 + (j-y_0)^2} \leq r) \\ 0...(otherwise) \end{cases}$$

$$--- (32)$$

and the destination image given by:

$$q(i, j) = \begin{cases} \dfrac{255}{r} c(\sqrt{(i-x_1)^2 + (j-y_1)^2})...(\sqrt{(i-x_1)^2 + (j-y_1)^2} \leq r) \\ 0...(otherwise) \end{cases}$$

$$--- (33)$$

with its center at $(x_1,y_1)$ and radius r. Let c(x) has the form of $c(x)=x^k$. When the centers $(x_0,y_0)$ and $(x_1,y_1)$ are sufficiently far from each other, the histogram h(l) is then in the form of:

$$h(l) \propto rl^k \, (k \neq 0) \tag{34}$$

When k=1, the images represent objects with clear boundaries embedded in the backgrounds. These objects become darker toward their centers and brighter toward their boundaries. When k=-1, the images represent objects with vague boundaries. These objects are brightest at their centers, and become darker toward boundaries. Without much loss of generality, it suffices to state that objects in general are between these two types of objects. Thus, k such that $-1 \leqq k \leqq 1$ can cover the most cases, and it is guaranteed that the equation (27) is generally a decreasing function.

As can be observed from the above equation (34), attention must be directed to the fact that r is influenced by the resolution of the image, namely, r is proportional to $2^m$. That is why the factor $2^m$ was introduced in the above section [1.4.1].

[1. 4. 3] Dynamic determination of $\eta$

The parameter $\eta$ can also be automatically determined in the same manner. Initially, $\eta$ is set to zero, and the final mapping $f^{(n)}$ and the energy $C_f^{(n)}$ at the finest resolution are computed. Then, after $\eta$ is increased by a certain value $\Delta\eta$ and the final mapping $f^{(n)}$ and the energy $C_f^{(n)}$ at the finest resolution are again computed. This process is repeated until the optimal value is obtained. $\eta$ represents the stiffness of the mapping because it is a weight of the following equation (35).

$$E_{0(i,j)}^{(m,s)} = \|f^{(m,s)}(i,j) - f^{(m,s-1)}(i,j)\|^2 \tag{35}$$

When $\eta$ is zero, $D_f^{(n)}$ is determined irrespective of the previous submapping, and the present submapping would be elastically deformed and become too distorted. On the other hand, when $\eta$ is a very large value, $D_f^{(n)}$ is almost completely determined by the immediately previous submapping. The submappings are then very stiff, and the pixels are mapped to almost the same locations. The resulting mapping is therefore the identity mapping. When the value of $\eta$ increases from 0, $C_f^{(n)}$ gradually decreases as will be described later. However, when the value of $\eta$ exceeds the optimal value, the energy starts increasing as shown in Fig. 4. In Fig. 4, the x-axis represents $\eta$, and y-axis represents $C_f$.

The optimum value of $\eta$ which minimizes $C_f^{(n)}$ can be obtained in this manner. However, since various elements affects the computation compared to the case of $\lambda$, $C_f^{(n)}$ changes while slightly fluctuating. This difference is caused because a submapping is re-computed once in the case of $\lambda$ whenever an input changes slightly, whereas all the submappings must be re-computed in the case of $\eta$. Thus, whether the obtained value of $C_f^{(n)}$ is the minimum or not cannot be judged instantly. When candidates for the minimum value are found, the true minimum needs to be searched by setting up further finer interval.

[1. 5] Supersampling

When deciding the correspondence between the pixels, the range of $f^{(m,s)}$ can be expanded to R X R (R being the set of real numbers) in order to increase the degree of freedom. In this case, the intensity of the pixels of the destination image is interpolated, so that $f^{(m,s)}$ having the intensity at non-integer points

$$V(q_{f^{(m,s)}(i,j)}^{(m,s)}) \tag{36}$$

is provided. Namely, supersampling is performed. In its actual implementation, $f^{(m,s)}$ is allowed to take integer and half integer values, and

$$V(q_{(i,j)+(0.5,0.5)}^{(m,s)}) \tag{37}$$

is given by

$$(V(q_{(i,j)}^{(m,s)}) + V(q_{(i,j)+(1,1)}^{(m,s)}))/2 \tag{38}$$

[1. 6] Normalization of the pixel intensity of each image

When the source and destination images contain quite different objects, the raw pixel intensity may not be used to compute the mapping because a large difference in the pixel intensity causes excessively large energy $C_f^{(m,s)}$ relating the intensity, thus making it difficult to perform the correct evaluation.

For example, the matching between a human face and a cat's face is computed as shown in Figs. 20(a) and 20(b). The cat's face is covered with hair and is a mixture of very bright pixels and very dark pixels. In this case, in order to compute the submappings of the two faces, its subimages are normalized. Namely, the darkest pixel intensity is set to 0 while the brightest pixel intensity is set to 255, and other pixel intensity values are obtained using the linear interpolation.

[1. 7] Implementation

In the implementation, utilized is a heuristic method where the computation proceeds linearly as the source image is scanned. First, the value of $f^{(m,s)}$ is determined at the top leftmost pixel (i,j)=(0,0). The value of each $f^{(m,s)}$(i, j) is then determined while i is increased by one at each step. When i reaches the width of the image, j is increased by one and i is reset to zero. Thereafter, $f^{(m,s)}$ (i,j) is determined while scanning the source image. Once pixel correspondence is determined for all the points, it means that a single mapping $f^{(m,s)}$ is determined.

When a corresponding point $q_{f(i,j)}$ is determined for $p_{(i,j)}$, a corresponding point $q_{f(i,j+1)}$ of $p_{(i,j+1)}$ is determined next. The position of $q_{f(i,j+1)}$ is constrained by the position of $q_{f(i,j)}$ since the position of $q_{f(i,j+1)}$ satisfies the BC. Thus, in this system, a point whose corresponding point is determined earlier is given higher priority. If the situation continues in which (0,0) is always given the highest priority, the final mapping might be unnecessarily biased. In order to avoid this bias, $f^{(m,s)}$ is determined in the following manner in the base technology.

First, when (s mod 4) is 0, $f^{(m,s)}$ is determined starting from (0,0) while gradually increasing both i and j. When (s mod 4) is 1, it is determined starting from the top rightmost location while decreasing i and increasing j. When (s mod 4) is 2, it is determined starting from the bottom rightmost location while decreasing both i and j. When (s mod 4) is 3, it is determined starting from the bottom leftmost location while increasing i and decreasing j. Since a concept such as the submapping, that is, a parameter s, does not exist in the finest n-th level, $f^{(m,s)}$ is computed continuously in two directions on the assumption that s=0 and s=2.

In the actual implementation, the values of $f^{(m,s)}$(i,j) (m=0,...,n) that satisfy the BC are chosen as much as possible, from the candidates (k,l) by awarding a penalty to the candidates violating the BC. The energy $D_{(k,l)}$ of the candidate that violates the third condition of the BC is multiplied by $\phi$ and that of a candidate that violates the first or second condition of the BC is multiplied by $\phi$. In the actual implementation, $\phi$=2 and $\phi$ =100000 are used.

In order to check the above-mentioned BC, the following test is performed as the actual procedure when determining (k,l)=$f^{(m,s)}$(i,j). Namely, for each grid point (k,l) in the inherited quadrilateral of $f^{(m,s)}$(i,j), whether or not the z-component of the outer product of

$$W = \vec{A} \times \vec{B} \qquad --- \ (39)$$

is equal to or greater than 0 is examined, where

$$\vec{A} = \overrightarrow{q_{f^{(m,s)}(i,j-1)}^{(m,s)} q_{f^{(m,s)}(i+1,j-1)}^{(m,s)}} \qquad --- (40)$$

$$\vec{B} = \overrightarrow{q_{f^{(m,s)}(i,j-1)}^{(m,s)} q_{(k,l)}^{(m,s)}} \qquad --- (41)$$

Here, the vectors are regarded as 3D vectors and the z-axis is defined in the orthogonal right-hand coordinate system. When W is negative, the candidate is awarded a penalty by multiplying $D_{(k,l)}^{(m,s)}$ by $\phi$ so as not to be selected as much as possible.

Figs. 5(a) and 5(b) illustrate the reason why this condition is inspected. Fig. 5(a) shows a candidate without a penalty and Fig. 5(b) shows one with a penalty. When determining the mapping $f^{(m,s)}$(i,j+1) for the adjacent pixel at (i,j+1), there is no pixel on the source image plane that satisfies the BC if the z-component of W is negative because then $q_{(k,l)}^{(m,s)}$ passes the boundary of the adjacent quadrilateral.

[1. 7. 1] The order of submappings

In the actual implementation, σ (0)=0, σ (1)=1, σ (2)=2, σ (3)=3, σ (4)=0 were used when the resolution level was even, while σ (0)=3, σ (1)=2, σ (2)=1, σ (3)=0, σ (4)=3 were used when the resolution level was odd. Thus, the submappings are shuffled in an approximately manner. It is to be noted that the submapping is primarily of four types, and s may be any one among 0 to 3. However, a processing with s=4 was actually performed for the reason described later.

[1. 8] Interpolations

After the mapping between the source and destination images is determined, the intensity values of the corresponding pixels are interpolated. In the implementation, trilinear interpolation is used. Suppose that a square $p_{(i,j)}p_{(i+1,j)}p_{(i+1,j+1)}p_{(i,j+1)}$ on the source image plane is mapped to a quadrilateral $q_{f(i,j)}q_{f(i+1,j)}q_{f(i+1,j+1)}q_{f(i,j+1)}$ on the destination image plane. For simplicity, the distance between the image planes is assumed 1. The intermediate image pixels r(x,y,t) ($0{\leq}x{\leq}$ N-1, $0{\leq}y{\leq}$M-1) whose distance from the source image plane is t ($0{\leq}t{\leq}1$) are obtained as follows. First, the location of the pixel r(x,y,t), where x,y,t∈R, is determined by the equation (42).

$$
\begin{aligned}
(x, y) = &(1 - dx)(1 - dy)(1 - t)(i, j) + (1 - dx)(1 - dy)tf(i, j) \\
&+ dx(1 - dy)(1 - t)(i + 1, j) + dx(1 - dy)tf(i + 1, j) \\
&+ (1 - dx)dy(1 - t)(i, j + 1) + (1 - dx)dytf(i, j + 1) \\
&+ dxdy(1 - t)(i + 1, j + 1) + dxdytf(i + 1, j + 1)
\end{aligned} \quad --- \quad (42)
$$

The value of the pixel intensity at r(x,y,t) is then determined by the equation (43).

$$
\begin{aligned}
V(r(x, y, t)) = &(1 - dx)(1 - dy)(1 - t)V(p_{(i,j)}) + (1 - dx)(1 - dy)tV(q_{f(i,j)}) \\
&+ dx(1 - dy)(1 - t)V(p_{(i+1,j)}) + dx(1 - dy)tV(q_{f(i+1,j)}) \\
&+ (1 - dx)dy(1 - t)V(p_{(i,j+1)}) + (1 - dx)dytV(q_{f(i,j+1)}) \\
&+ dxdy(1 - t)V(p_{(i+1,j+1)}) + dxdytV(q_{f(i+1,j+1)})
\end{aligned}
$$

$$--- \quad (43)$$

where dx and dy are parameters varying from 0 to 1.

[1. 9] Mapping on which constraints are imposed

So far, the determination of the mapping to which no constraint is imposed has been described. However, when a correspondence between particular pixels of the source and destination images is provided in a predetermined manner, the mapping can be determined using such correspondence as a constraint.

The basic idea is that the source image is roughly deformed by an approximate mapping which maps the specified pixels of the source image to the specified pixels of the destination images and thereafter a mapping f is accurately computed.

First, the specified pixels of the source image are mapped to the specified pixels of the destination image, then the approximate mapping that maps other pixels of the source image to appropriate locations are determined. In other words, the mapping is such that pixels in the vicinity of the specified pixels are mapped to the locations near the position to which the specified one is mapped. Here, the approximate mapping at the m-th level in the resolution hierarchy is denoted by $F^{(m)}$.

The approximate mapping F is determined in the following manner. First, the mapping for several pixels are specified. When $n_s$ pixels

$$p(i_0,j_0),p(i_1,j_1),...,p(i_{n_s-1},j_{n_s-1}) \tag{44}$$

of the source image are specified, the following values in the equation (45) are determined.

$$
\begin{aligned}
F^{(n)}(i_0,j_0) &= (k_0,l_0), \\
F^{(n)}(i_1,j_1) &= (k_1,l_1),..., \\
F^{(n)}(i_{n_s-1},j_{n_s-1}) &= (k_{n_s-1},l_{n_s-1})
\end{aligned}
\qquad --- \ (45)
$$

For the remaining pixels of the source image, the amount of displacement is the weighted average of the displacement of $p(i_h,j_h)$ ($h=0,..., n_s-1$). Namely, a pixel $p_{(i,j)}$ is mapped to the following pixel (expressed by the equation (46)) of the destination image.

$$F^{(m)}(i,j) = \frac{(i,j) + \sum_{h=0}^{h=n_s-1}(k_h - i_h, l_h - j_h)weight_h(i,j)}{2^{n-m}} \qquad --- \ (46)$$

where

$$weight_h(i,j) = \frac{1/\|(i_h - i, j_h - j)\|^2}{total\_weight(i,j)} \qquad --- \ (47)$$

where

$$total\_weight(i,j) = \sum_{h=0}^{h=n_s-1} 1/\|(i_h - i, j_h - j)\|^2 \qquad --- \ (48)$$

Second, the energy $D_{(i,j)}^{(m,s)}$ of the candidate mapping f is changed so that mapping f similar to $F^{(m)}$ has a lower energy. Precisely speaking, $D_{(i,j)}^{(m,s)}$ is expressed by the equation (49).

$$D_{(i,j)}^{(m,s)} = E_{0(i,j)}^{(m,s)} + \eta E_{1(i,j)}^{(m,s)} + \kappa E_{2(i,j)}^{(m,s)} \tag{49}$$

$$E_{2(i,j)}^{(m,s)} = \begin{cases} 0, & if \left\|F^{(m)}(i,j) - f^{(m,s)}(i,j)\right\|^2 \leq \left\lfloor \dfrac{\rho^2}{2^{2(n-m)}} \right\rfloor \\ \left\|F^{(m)}(i,j) - f^{(m,s)}(i,j)\right\|^2, & otherwise \end{cases} \qquad --- \ (50)$$

where $\kappa, \rho \geqq 0$. Finally, the mapping f is completely determined by the above-described automatic computing process of mappings.

Note that $E_{2(i,j)}^{(m,s)}$ becomes 0 if $f^{(m,s)}(i,j)$ is sufficiently close to $F^{(m)}(i,j)$ i.e., the distance therebetween is equal to or less than

$$\left\lfloor \frac{\rho^2}{2^{2(n-m)}} \right\rfloor \qquad --- \quad (51)$$

It is defined so because it is desirable to determine each value $f^{(m,s)}(i,j)$ automatically to fit in an appropriate place in the destination image as long as each value $f^{(m,s)}(i,j)$ is close to $F^{(m)}(i,j)$. For this reason, there is no need to specify the precise correspondence in detail, and the source image is automatically mapped so that the source image matches the destination image.

[2] Concrete Processing Procedure

The flow of the process utilizing the respective elemental techniques described in [1] will be described.

Fig. 6 is a flowchart of the entire procedure of the base technology. Referring to Fig. 6, a processing using a multiresolutional critical point filter is first performed (S1). A source image and a destination image are then matched (S2). S2 is not indispensable, and other processings such as image recognition may be performed instead, based on the characteristics of the image obtained at S1

Fig. 7 is a flowchart showing the details of the process at S1 shown in Fig. 6. This process is performed on the assumption that a source image and a destination image are matched at S2. Thus, a source image is first hierarchized using a critical point filter (S10) so as to obtain a series of source hierarchical images. Then, a destination image is hierarchized in the similar manner (S11) so as to obtain a series of destination hierarchical images. The order of S10 and S11 in the flow is arbitrary, and the source image and the destination image can be generated in parallel.

Fig. 8 is a flowchart showing the details of the process at S10 shown in Fig. 7. Suppose that the size of the original source image is $2^n \mathrm{X} 2^n$. Since source hierarchical images are sequentially generated from one with a finer resolution to one with a coarser resolution, the parameter m which indicates the level of resolution to be processed is set to n (S100). Then, critical points are detected from the images $p^{(m,0)}$, $p^{(m,1)}$, $p^{(m,2)}$ and $p^{(m,3)}$ of the m-th level of resolution, using a critical point filter (S101), so that the images $p^{(m-1,0)}$, $p^{(m-1,1)}$, $p^{(m-1,2)}$ and $p^{(m-1,3)}$ of the (m-1)th level are generated (S102). Since m=n here, $p^{(m,0)} = p^{(m,1)} = p^{(m,2)} = p^{(m,3)} = p^{(n)}$ holds and four types of subimages are thus generated from a single source image.

Fig. 9 shows correspondence between partial images of the m-th and those of (m-1)th levels of resolution. Referring to Fig. 9, respective values represent the intensity of respective pixels. $p^{(m,s)}$ symbolizes four images p(m, 0) through $p^{(m,3)}$, and when generating $p^{(m-1,0)}$, $p^{(m,s)}$ is regarded as $p^{(m,0)}$. For example, as for the block shown in Fig. 9, comprising four pixels with their pixel intensity values indicated inside, images $p^{(m-1,0)}$, $p^{(m-1,1)}$, $p^{(m-1,2)}$ and $p^{(m-1,3)}$ acquire "3", "8", "6" and "10", respectively, according to the rules described in [1.2]. This block at the m-th level is replaced at the (m-1)th level by respective single pixels acquired thus. Therefore, the size of the subimages at the (m-1)th level is $2^{m-1} \mathrm{X} 2^{m-1}$.

After m is decremented (S103 in Fig. 8), it is ensured that m is not negative (S104). Thereafter, the process returns to S101, so that subimages of the next level of resolution, i.e., a next coarser level, are generated. The above process is repeated until subimages at m=0 (0-th level) are generated to complete the process at S10. The size of the subimages at the 0-th level is 1 X 1.

Fig. 10 shows source hierarchical images generated at S10 in the case of n=3. The initial source image is the only image common to the four series followed. The four types of subimages are generated independently, depending on the type of a critical point. Note that the process in Fig. 8 is common to S11 shown in Fig. 7, and that destination hierarchical images are generated through the similar procedure. Then, the process by S1 shown in Fig. 6 is completed.

In the base technology, in order to proceed to S2 shown in Fig. 6 a matching evaluation is prepared. Fig. 11 shows the preparation procedure. Referring to Fig. 11, a plurality of evaluation equations are set (S30). Such the evaluation equations include the energy $C_f^{(m,s)}$ concerning a pixel value, introduced in [1.3.2.1], and the energy $D_f^{(m,s)}$ concerning the smoothness of the mapping introduced in [1.3.2.2]. Next, by combining these evaluation equations, a combined evaluation equation is set (S31). Such the combined evaluation equation includes $\lambda C_{(i,j)}^{(m,s)} + D_f^{(m,s)}$ Using $\eta$ introduced in [1.3.2.2], we have

$$\Sigma\Sigma(\lambda C_{(i,j)}^{(m,s)} + \eta E_{0(i,j)}^{(m,s)} + E_{1(i,j)}^{(m,s)}) \qquad (52)$$

In the equation (52) the sum is taken for each i and j

where i and j run through 0, 1,... , $2^{m-1}$. Now, the preparation for matching evaluation is completed.

Fig. 12 is a flowchart showing the details of the process of S2 shown in Fig. 6. As described in [1], the source hierarchical images and destination hierarchical images are matched between images having the same level of resolution. In order to detect global corresponding correctly, a matching is calculated in sequence from a coarse level to a fine level of resolution. Since the source and destination hierarchical images are generated by use of the critical point filter, the location and intensity of critical points are clearly stored even at a coarse level. Thus, the result of the global matching is far superior to the conventional method.

Referring to Fig. 12, a coefficient parameter η and a level parameter m are set to 0 (S20). Then, a matching is computed between respective four subimages at the m-th level of the source hierarchical images and those of the destination hierarchical images at the m-th level, so that four types of submappings $f^{(m,s)}$ (s=0, 1, 2, 3) which satisfy the BC and minimize the energy are obtained (S21). The BC is checked by using the inherited quadrilateral described in [1.3.3]. In that case, the submappings at the m-th level are constrained by those at the (m-1)th level, as indicated by the equations (17) and (18). Thus, the matching computed at a coarser level of resolution is used in subsequent calculation of a matching. This is a vertical reference between different levels. If m=0, there is no coarser level and the process, but this exceptional process will be described using Fig. 13.

On the other hand, a horizontal reference within the same level is also performed. As indicated by the equation (20) in [1.3.3], $f^{(m,3)}$, $f^{(m,2)}$ and $f^{(m,1)}$ are respectively determined so as to be analogous to $f^{(m,2)}$, $f^{(m,1)}$ and $f^{(m,0)}$. This is because a situation in which the submappings are totally different seems unnatural even though the type of critical points differs so long as the critical points are originally included in the same source and destination images. As can been seen from the equation (20), the closer the submappings are to each other, the smaller the energy becomes, so that the matching is then considered more satisfactory.

As for $f^{(m,0)}$, which is to be initially determined, a coarser level by one is referred to since there is no other submapping at the same level to be referred to as shown in the equation (19). In the experiment, however, a procedure is adopted such that after the submappings were obtained up to $f^{(m,3)}$, $f^{(m,0)}$ is renewed once utilizing the thus obtained subamppings as a constraint. This procedure is equivalent to a process in which s=4 is substituted into the equation (20) and $f^{(m,4)}$ is set to $f^{(m,0)}$ anew. The above process is employed to avoid the tendency in which the degree of association between $f^{(m,0)}$ and $f^{(m,3)}$ becomes too low. This scheme actually produced a preferable result. In addition to this scheme, the submappings are shuffled in the experiment as described in [1.7.1], so as to closely maintain the degrees of association among submappings which are originally determined independently for each type of critical point. Furthermore, in order to prevent the tendency of being dependent on the starting point in the process, the location thereof is changed according to the value of s as described in [1.7].

Fig. 13 illustrates how the submapping is determined at the 0-th level. Since at the 0-th level each sub-image is consitituted by a single pixel, the four submappings $f^{(0,s)}$ is automatically chosen as the identity mapping. Fig. 14 shows how the submappings are determined at the first level. At the first level, each of the sub-images is constituted of four pixels, which are indicated by a solid line. When a corresponding point (pixel) of the point (pixel) x in $p^{(1,s)}$ is searched within $q^{(1,s)}$, the following procedure is adopted.

    1. An upper left point a, an upper right point b, a lower left point c and a lower right point d with respect to the point x are obtained at the first level of resolution.

    2. Pixels to which the points a to d belong at a coarser level by one, i.e., the 0-th level, are searched. In Fig. 14, the points a to d belong to the pixels A to D, respectively. However, the points A to C are virtual pixels which do not exist in reality.

    3. The corresponding points A' to D' of the pixels A to D, which have already been defined at the 0-th level, are plotted in $q^{(1,s)}$. The pixels A' to C' are virtual pixels and regarded to be located at the same positions as the pixels A to C.

    4. The corresponding point a' to the point a in the pixel A is regarded as being located inside the pixel A', and the point a' is plotted. Then, it is assumed that the position occupied by the point a in the pixel A (in this case, positioned at the upper right) is the same as the position occupied by the point a' in the pixel A'.

    5. The corresponding points b' to d' are plotted by using the same method as the above 4 so as to produce an inherited quadrilateral defined by the points a' to d'.

    6. The corresponding point x' of the point x is searched such that the energy becomes minimum in the inherited quadrilateral. Candidate corresponding points x' may be limited to the pixels, for instance, whose centers are included in the inherited quadrilateral. In the case shown in Fig. 14, the four pixels all become candidates.

The above described is a procedure for determining the corresponding point of a given point x. The same processing is performed on all other points so as to determine the submappings. As the inherited quadrilateral is expected to become deformed at the upper levels (higher than the second level), the pixels A' to D' will be positioned apart from one another as shown in Fig. 3.

Once the four submappings at the m-th level are determined in this manner, m is incremented (S22 in Fig. 12). Then, when it is confirmed that m does not exceed n (S23), return to S21. Thereafter, every time the process returns to S21, submappings at a finer level of resolution are obtained until the process finally returns to S21 at which time the mapping $f^{(n)}$ at the n-th level is determined. This mapping is denoted as $f^{(n)}(\eta=0)$ because it has been determined relative to $\eta=0$.

Next, to obtain the mapping with respect to other different $\eta$, $\eta$ is shifted by $\Delta\eta$ and m is reset to zero (S24). After confirming that new $\eta$ does not exceed a predetermined search-stop value $\eta_{max}$(S25), the process returns to S21 and the mapping $f^{(n)}$ ($\eta=\Delta\eta$) relative to the new $\eta$ is obtained. This process is repeated while obtaining $f^{(n)}(\eta=i\Delta\eta)$ ($i$=0,1,...) at S21. When $\eta$ exceeds $\eta_{max}$, the process proceeds to S26 and the optimal $\eta=\eta_{opt}$ is determined using a method described later, so as to let $f^{(n)}(\eta=\eta_{opt})$ be the final mapping $f^{(n)}$.

Fig. 15 is a flowchart showing the details of the process of S21 shown in Fig. 12. According to this flowchart, the submappings at the m-th level are determined for a certain predetermined $\eta$. When determining the mappings, the optimal $\lambda$ is defined independently for each submapping in the base technology.

Referring to Fig. 15, s and $\lambda$ are first reset to zero (S210). Then, obtained is the submapping $f^{(m,s)}$ that minimizes the energy with respect to the then $\lambda$ (and, implicitly, $\eta$) (S211), and the thus obtained is denoted as $f^{(m,s)}(\lambda=0)$. In order to obtain the mapping with respect to other different $\lambda$, $\lambda$ is shifted by $\Delta\lambda$. After confirming that new $\lambda$ does not exceed a predetermined search-stop value $\lambda_{max}$ (S213), the process returns to S211 and the mapping $f^{(m,s)}$ ($\lambda = \Delta\lambda$) relative to the new $\lambda$ is obtained. This process is repeated while obtaining $f^{(m,s)}(\lambda=i\Delta\lambda)(i$=0,1,...). When $\lambda$ exceeds $\lambda_{max}$, the process proceeds to S214 and the optimal $\lambda=\lambda_{opt}$ is determined , so as to let $f^{(n)}(\lambda=\lambda_{opt})$ be the final mapping $f^{(m,s)}$ (S214).

Next, in order to obtain other submappings at the same level, $\lambda$ is reset to zero and s is incremented (S215). After confirming that s does not exceed 4 (S216), return to S211. When s=4, $f^{(m,0)}$ is renewed utilizing $f^{(m,3)}$ as described above and a submapping at that level is determined.

Fig. 16 shows the behavior of the energy $C_f^{(m,s)}$ corresponding to $f^{(m,s)}(\lambda=i\Delta\lambda)(i$=0,1,...) for a certain m and s while varying $\lambda$. Though described in [1.4], as $\lambda$ increases, $C_f^{(m,s)}$ normally decreases but changes to increase after $\lambda$ exceeds the optimal value. In this base technology, $\lambda$ in which $C_f^{(m,s)}$ becomes the minima is defined as $\lambda_{opt}$. As observed in Fig. 16, even if $C_f^{(m,s)}$ turns to decrease again in the range $\lambda > \lambda_{opt}$, the mapping will be spoiled by then and becomes meaningless. For this reason, it suffices to pay attention to the first occurring minima value. $\lambda_{opt}$ is independently determined for each submapping including $f^{(n)}$.

Fig. 17 shows the behavior of the energy $C_f^{(n)}$ corresponding to $f^{(n)}$ ($\eta = i\Delta\eta)(i$ = 0,1,...) while varying $\eta$. Here too, $C_f^{(n)}$ normally decreases as $\eta$ increases, but $C_f^{(n)}$ changes to increase after $\eta$ exceeds the optimal value. Thus, $\eta$ in which $C_f^{(n)}$ becomes the minima is defined as $\eta_{opt}$. Fig. 17 can be considered as an enlarged graph around zero along the horizontal axis shown in Fig. 4. Once $\eta_{opt}$ is determined, $f^{(n)}$ can be finally determined.

As described above, this base technology provides various merits. First, since there is no need to detect edges, problems in connection with the conventional techniques of the edge detection type are solved. Furthermore, prior knowledge about objects included in an image is not necessitated, thus automatic detection of corresponding points is achieved. Using the critical point filter, it is possible to preserve intensity and locations of critical points even at a coarse level of resolution, thus being extremely advantageous when applied to the object recognition, characteristic extraction, and image matching. As a result, it is possible to construct an image processing system which significantly reduces manual labors.

Some extensions to or modifications of the above-described base technology may be made as follows:

(1) Parameters are automatically determined when the matching is computed between the source and destination hierarchical images in the base technology. This method can be applied not only to the calculation of the matching between the hierarchical images but also to computing the matching between two images in general.

For instance, an energy $E_0$ relative to a difference in the intensity of pixels and an energy $E_1$ relative to a positional displacement of pixels between two images may be used as evaluation equations, and a linear sum of these equations, i.e., $E_{tot}=\alpha E_0+E_1$, may be used as a combined evaluation equation. While paying attention to the neighborhood of the extrema in this combined evaluation equation, $\alpha$ is automatically determined. Namely, mappings which minimize $E_{tot}$ are obtained for various $\alpha$'s. Among such mappings, $\alpha$ at which $E_{tot}$ takes the minimum value is defined as an optimal parameter. The mapping corresponding to this parameter is finally regarded as the optimal mapping between the two images.

Many other methods are available in the course of setting up evaluation equations. For instance, a term which becomes larger as the evaluation result becomes more favorable, such as $1/E_1$ and $1/E_2$, may be employed. A combined evaluation equation is not necessarily a linear sum, but an n-powered sum (n=2, 1/2, -1, -2, etc.), a polynomial or an arbitrary function may be employed when appropriate.

The system may employ a single parameter such as the above $\alpha$, two parameters such as $\eta$ and $\lambda$ in the base technology or more than two parameters. When there are more than three parameters used, they are determined while changing one at a time.

(2) In the base technology, a parameter is determined in such a manner that a point at which the evaluation equation $C_f^{(m,s)}$ constituting the combined evaluation equation takes the minima is detected after the mapping such that the value of the combined evaluation equation becomes minimum is determined. However, instead of this two-step processing, a parameter may be effectively determined, as the case may be, in a manner such that the minimum value of a combined evaluation equation becomes minimum. In that case, $\alpha E_0 + \beta E_1$, for instance, may be taken up as the combined evaluation equation, where $\alpha + \beta = 1$ is imposed as a constraint so as to equally treat each evaluation equation. The essence of automatic determination of a parameter boils down to determining the parameter such that the energy becomes minimum.

(3) In the base technology, four types of submappings related to four types of critical points are generated at each level of resolution. However, one, two, or three types among the four types may be selectively used. For instance, if there exists only one bright point in an image, generation of hierarchical images based solely on $f^{(m,3)}$ related to a maxima point can be effective to a certain degree. In this case, no other submapping is necessary at the same level, thus the amount of computation relative on s is effectively reduced.

(4) In the base technology, as the level of resolution of an image advances by one through a critical point filter, the number of pixels becomes 1/4. However, it is possible to suppose that one block consists of 3X3 pixels and critical points are searched in this 3X3 block, then the number of pixels will be 1/9 as the level advances by one.

(5) When the source and the destination images are color images, they are first converted to monochrome images, and the mappings are then computed. The source color images are then transformed by using the mappings thus obtained as a result thereof. As one of other methods, the submappings may be computed regarding each RGB component.

**Image Coding Techniques**

Image coding techniques utilizing the above-described base technology will be described here. First of all, the technique will be described in the following first embodiment, based on a technique in the pending Japanese Patent Application No. 2001-21098, which serves as a basic technology, proposed by the same assignee of the present invention. Then, a technique utilizing the above technique described in the first embodiment will be described where added is the image trimming that is the characteristic feature of the present invention.

First Embodiment

Fig. 18 shows both a first image I1 and a second image I2 which serve as key frames, where certain pixels $p_1(x_1, y_1)$ and $p_2(x_2, y_2)$ correspond therebetween. The correspondence of these is obtained in the base technology.

Referring to Fig. 19, when a mesh is provided on the first image I1, its corresponding position is shown on the second image I2 of a polygon which constitutes the mesh. Now, a polygon R1 aimed at on the first image I1 is determined by four lattice points A, B, C and D. This polygon R1 is called a "source polygon." As have been shown in Fig. 18, these lattice points A, B, C and D have respectively corresponding points A', B', C' and D' on the second image I2, and a polygon R2 formed thus by the corresponding points is called a "destination polygon." The source polygon is generally a rectangle while the destination polygon is generally a quadrilateral. In any event, according to the present embodiment, the correspondence relation between the first and second images I1 and I2 is not described pixel by pixel, instead, the corresponding pixels are described with respect to the lattice points of the source polygon. Its description is written in a corresponding point file. By directing attentions to the lattice points, a capacity for the corresponding point file can be reduced significantly.

The corresponding point file is utilized for generating an intermediate image of the first image I1 and the second image I2. As this was described in the base technology section, intermediate images at arbitrary temporal position can be generated by interpolating positions between the corresponding points. Thus, storing the first image I1, the second image I2 and the corresponding point file enables generating the morphing between two images and smooth motion pictures thereto, thus obtaining compression effect on the motion pictures.

Fig. 20 shows a method by which to compute the correspondence relation regarding points other than the lattice points, from the corresponding point file. Since in the corresponding point file there exits information on the lattice points only, data corresponding to interior points of the polygon need to be computed separately. Fig. 20 shows correspondence between a triangle ABC which corresponds to a lower half of the source polygon R1 shown in Fig. 19 and a triangle A'B'C' which corresponds to that of the destination polygon R2 shown in Fig. 19. Now, suppose that an intersection point of a line segment AC and an extended line of BQ to the AC through an interior point Q of the triangle ABC interior-divides the line segment AC in the ratio t:(1-t), and the point Q interior-divides a line segment connecting such the AC interior-dividing point and a point B in the ratio s:(1-s). Similarly, an intersection point of a line segment A'C' and an extended line of B'Q' to the A'C' through a corresponding point Q', which corresponds to the point Q, in a triangle A'B'C' in a destination polygon side interior-divides the line segment A'C', in the ratio t:(1-t), and the point Q' interior-divides a line segment connecting such the A'C' interior-dividing point and a point B' corresponding to B in the ratio s:(1-s). Namely, it is preferable that the source polygon is divided into a triangle, and interior points of the destination polygon are determined in the forms of interior division of the vector concerning the triangle. When expressed in a vector skew field, it becomes

$$BQ = (1-s)\{(1-t)BA + tBC\},$$

thus, we have

$$B'Q' = (1-s)\{(1-t)B'A' + tB'C'\}$$

Of course, the similar processing will be performed on a triangle ACD which is an upper half of the source polygon R1 shown in Fig. 19 and a triangle A'C'D' which is that of the destination polygon R2.

Fig. 21 shows the above-described processing procedure. Firstly, as shown in Fig. 19, the matching results on the lattice points taken on the first image I1 are acquired (S10). Then, it is preferable that the pixel-by-pixel matching according to the base technology is performed, so that a portion corresponding to the lattice points is extracted from those results. It is to be noted that the matching results on the lattice points may be specified based on other matching techniques such as the optical flow and block matching, instead of using the base technology.

Thereafter, a destination polygon is defined on the second image I2 (S12), as shown in the right-hand side of Fig. 19. Since the above procedure completes generation of the corresponding point file, data by which to identify the first image I1 and the second image I2 are incorporated to this corresponding point file and then are outputted therefrom (S14). The two images and the corresponding point file are stored in arbitrary recording device or medium, or may be transmitted directly via a network or broadcast wave.

Fig. 22 shows a procedure to generate an intermediate image by using the corresponding point file. Firstly, the first image I1 and the second image I2 are read in (S20), and then the corresponding point file is read in (S22). Thereafter, the correspondence relation between points in the source polygon and those of the destination polygon is computed by a method shown in Fig. 20 (S24). At this point, the correspondence relation on all pixels within the image can be acquired. As described in the base technology, the coordinates and colors of points corresponding to each other are interior-divided in the ratio u:(1-u), so that an intermediate image in a position which interior-divides temporally in the ratio (1-u):u between the first image I1 and the second image I2 can be generated (S26). It is to be noted that not only the interpolation but also extrapolation may be performed.

Fig. 23 shows a structure of an image processing apparatus 10 which performs the above-described processing. The apparatus 10 shown in Fig. 23 is illustrated in a manner such that a coding side and a decoding side thereof are integrated into a single unit. However, in the actual structure, the coding side is comprised mainly of from an image input unit 12 up to a corresponding point file storage 16 in the same figure while the decoding side is comprised mainly of from the corresponding point file storage 16 up to a display unit 20 in the same figure.

The image processing apparatus 10 includes: an image input unit 12 which acquires the first image I1 and second image I2 from an external storage device, a photographing camera and so forth; a matching processor 14 which performs a matching computation on these images using the base technology or other techniques; a corresponding point file storage 16 which stores the corresponding point file F generated by the matching processor 14; an intermediate image generator 18 which generates an intermediate image from the first image I1 and the second image I2; and a display unit 20 which displays the first image I1, second image and intermediate image as images close to the original motion picture by adjusting the timing thereof. Moreover, a communication unit 22 sends out the first image I1, second image I2 and corresponding point file F to a transmission infrastructure such as a network or others according to a request from an external side. It is to be noted that mesh data, which indicate the size of the mesh, the positions of the lattice points and so forth, are being inputted in the matching processor 14.

By implementing the above-described structure, the first image I1 and the second image I2 which were inputted to the image input unit 12 are sent to the matching processor 14. The matching processor performs pixel-by-pixel matching computation in between the images. The matching processor 14 generates the corresponding point file F based on the mesh data, and the thus generated file F is outputted to the corresponding point file storage 16.

The intermediate image generator 18 reads out the corresponding point file F upon request from a user or due to other factors, and generates an intermediate image. This intermediate image is sent to the display unit 20, where the time adjustment of image output is performed, so that motion pictures or morphing images are displayed. As evident from this operation, the intermediate image generator 18 and the display unit 20 may be provided in a remote terminal which is separated from the apparatus 10, and in that case the terminal can receive relatively light data comprised of the first image I1, second image I2 and corresponding point file F and can independently reproduce the motion pictures.

The communication unit 22 is structured and provided accordingly on the assumption that there is provided a remote terminal via a network. Namely, the communication unit 22 sends out the first image I1, second image I2 and corresponding point file F via the network or broadcast wave, so that motion pictures are displayed at the remote terminal side. Of course, the remote terminal may be provided for the purpose of storage instead of display. The apparatus may be used in a manner such that the first image I1, the second image I2 and the corresponding point file therefor are inputted from an external source such as a network or the like via the communication unit 22, and these are transferred to the intermediate image generator 18 where the interpolation is computed so as to generate intermediate images. A data path P therefor is indicated in Fig. 23.

Actual experiment was carried out according to the processing contents of the first embodiment. For example, the size of 256 X 256 or a similar size thereto was adopted as that of the first image and second image, and the lattice points were set at intervals of 10 to some tens of pixels in the vertical and horizontal directions, so that extremely satisfactory morphing or satisfactory motion picture compression effect was obtained. The size of the corresponding point file is of some kilo to 10 kilo bytes or so, and it was confirmed that high image quality and smallness of the data amount are achieved.

Second Embodiment

A second embodiment, in addition to the first embodiment, deals with a problem of erroneous correspondence at the time of generation of the intermediate image. Suppose that there are two key frames. If the two field-of-view spaces for a camera which photographed these images coincide completely, their intermediate image will be an almost natural one. However, when the camera pans (namely, changes the viewing direction) or the camera zooms in and out (namely, changes magnification while the radial direction is kept intact), there will be caused a point which is photographed in one of the two key frames but does not exist in other key frame. Such the point will be called a "correspondence incapable point" hereinafter. The "correspondence incapable point" appears, for example, when a surrounding landscape is photographed panoramically while rotating the camera or when a distance view is magnified by zooming in the camera, and so forth.

A problem caused by the correspondence incapable point can not be resolved in a substantial manner. Thus, according to the second embodiment, an edge portion of the intermediate is cut out and displayed in order that the correspondence incapable point will not cause erroneous correspondence and the intermediate image will thus not appear unnatural. By the same token, a frame provided for adjusting the image size is cut out in a similar manner.

Fig. 24 is an example to illustrate how the correspondence incapable point appears. In Fig. 24, suppose that a camera 50 moves to a right position from a point where the first key frame I1 was shot, or the camera 50 photographed the second key frame I2 by changing the visual line to the right. Then, at the right edge of the first key frame I1 there is a strip-shaped region r1 caused by the correspondence incapable point, and likewise there is caused a strip-shaped region r2 at the left edge of the second key frame I2. Thus, referring to Fig. 25, in this case, these two regions r1 and r2 are regarded as a region IVR (hereinafter also simply referred to as an "invalidated region") which should be invalidated, and will be cut out at the time of display.

Fig. 26 is another example to illustrate how the correspondence incapable point appears. In Fig. 26, suppose that the camera 50 moves in close to a subject from a position where the camera 50 photographed the first key frame I1, or the camera 50 photographed the second key frame I2 by raising the magnification. Then, at the whole periphery in the first key frame I1 there is a region r1 caused by the correspondence incapable points. Thus, in this case as shown in Fig. 27, this region r1 is cut out as the invalidated region IVR at the time of display.

The image region excluding the above-described invalidated region (this image region being also referred to as a "remaining region") is useful and beneficial in the sense that the remaining region bearing a shape of, for example, being rectangular, which can be appreciated, as it is, as an image, makes simple a processing which comes after. Now, if a display system is of 800 X 600, then, for example, it is desirable that the size of the key frame be in advance taken to be a bit larger than 800 X 600, e.g., 1000 X 800, so that the remaining region may be adjusted to the size of 800 X 600.

The invalidation becomes meaningful when, for example, a camera which photographed key frames pans (namely, changes the viewing direction itself) or the camera zooms in and out (namely, magnification or reduction in the same radial direction). In this case, there are caused pixels which can not correspond between the key frames, thus causing erroneous correspondence in the matching. This erroneous correspondence is generally liable to be caused mainly in edges of the image. As described above, this is because points which are photographed in one of the two frames but are excluded from the field of view in other key frame occur mainly in the edge. Thus, the region to be invalidated is speculated to be a strip-shaped region surrounding the edge of the image as a picture frame or its part. This can be said to be the image trimming in the sense that the edge is thrown away.

When the corresponding point file F is generated at the matching processor 14, motion vectors between the corresponding points are detected so as to determine the invalidated region. In the case shown in Fig. 24, each pixel of the first key frame I1 is aligned almost in the right direction toward the second key frame I2. Thus, it is easy to see that the invalidated region IVR as shown in Fig. 25 is preferably determined in this case. The width of the invalidated region IVR is made proportional to the magnitude of the motion vector v. To see whether or not it is "aligned in the right direction", for example, assume once that the vector of right direction is assigned for each point and then take summation of the difference between the assumed vectors and the actual vectors, so that it can be judged based on whether or not the magnitude of the difference is less than a predetermined threshold value. As another method, presume in advance the variation of the field of view between the key frames in a plurality of ways and then make those motion vectors v into a template, so that the motion of the camera may be specified by the so-called template matching and, moreover, the invalidated region IVR may be decided.

It is to be noted that the motion vector v may be referred to not in the whole image but, instead, in the peripheral portion of the image as the major region of interest. Conversely, the vicinity of the center of the image may be referred to. The former is meaningful in the sense of utilization of the locality, however, it will become an reverse effect if a point included in the invalidated region IVR is referred to.

In a case where the motion vectors are aligned toward the upper right direction, the invalidated region IVR is provided in all around the image as shown in Fig. 27. The width of the invalidated region IVR in the top and bottom sides as well as the left and right sides of the image are made proportional to the longitudinal and transverse directional components of the respective motion vectors.

Fig. 29 schematically shows the motion vectors v for the case shown in Fig. 26. In this case, the motion vectors v are uniformly directed in the direction where the image is magnified on the whole starting from the center and its neighborhood. However, the peripheral portion of the image is included in the invalidated region IVR, thus the erroneous correspondence is caused there and no proper motion vector v is attained. When the invalidated region IVR is rather large, namely, when the variation of the field of view between the key frames is large, it will be very meaningful if a reference region of the motion vectors v is narrowed down to the close neighborhood of the center thereof. It is preferable that, in the case shown in Fig. 29 too, the invalidated region IVR be determined by the template matching and others including statistical processings such as variance computation.

It is to be noted that the above-described determination of the invalidated region may be carried out at the coding side or decoding side. If carried out at the coding side, information on the invalidated region can be incorporated into a coded data stream in the following manner.

1. As added information accompanied with the corresponding point file F, the coordinates of the invalidated region and its processing method are described here. As a processing method, there are cases, for example, where the invalidated region is cut out and displayed accordingly, and the invalidated region is filled with a background color, for example, black color, and is displayed accordingly, and so forth. In the former case, since the effective display region is reduced, it may be decided in advance that the pixels whose number is less than the key frame is displayed at the decoding side. Or, the size of the key frame may be set in advance to a bit larger one so that the large effective display region may be provided even after the trimming. In the latter case, besides specifying any specific color, arbitrary texture data and other image data may be stored in a coded data stream, so that the decoding side may explicitly or implicitly instruct to replace the invalidated region with this image data. Moreover, among data of the corresponding point file F, correspondence information regarding points included in the invalidated region IVR may be deleted, so that the decoding side can detect the position and shape of the invalidated region, based on the fact that "there is no data." The deletion of the correspondence data is similarly effective in the following #2 - #4.

2. The above-described added information is described in the corresponding point file F. Namely, the format of the corresponding point file F is changed.

3. Instead of utilizing the added information, the image data for the portion which corresponds to the invalidated region IVR are cut out and a key frame of the somewhat smaller size is generated, so that this key frame is incorporated into the coded data stream.

4. In a case where the variation of the field of view is small and thus the trimming is not required, such the fact is positively incorporated into the coded data stream, or no action is taken.

The above description shows a structure and operation thereof at the coding side. As long as there is an arrangement made between the decoding side and the coding side, after a necessary trimming processing is carried out, the image can be reproduced at the decoding side. Now, decoding-side processings which correspond to the above #1 - #4 are specifically the following #1a - #4a.

1a. The coded data streams are inputted so as to detect the added information. If an invalidated region and its processing method are described in the added information, the image is trimmed and reproduced according to the invalidated region and its processing method.

2a. The above-described added information is detected inside the corresponding point file F.

3a. The key frame included in the coded data stream is reproduced and displayed according to the size of the key frame.

4a. If "no trimming required" is indicated, the image is reproduced in a normal manner.

In any case, there is usually an arrangement with the coding side, in advance, as to the location, format and so forth of the added information. Even if there is no arrangement, the location, format and so forth of the added information can be dealt with to a certain degree by inspecting the coded data stream at the decoding side. For example, if the added information is included in the coded data stream, it will be utilized; if it is not included, the correspondence information which has been deleted in the corresponding point file is detected, thereby the trimming is performed while the invalidated region is recognized by itself. Moreover, if the deleted corresponding point information is not available, the image will be reproduced in a full size. However, the decoding side may determine the invalidated region by itself by detecting the motion vectors in the same manner as in the coding side, so that the trimming may be carried out by itself. If the key frame becomes small due to the trimming, it is preferable that the intermediate frame be also made smaller by the same trimming.

Fig. 30 shows a structure of an image processing apparatus 100 which performs the above processings, according to the second embodiment. In Fig. 30, the same reference numerals are given to the same components shown in Fig. 23 and different components will be mainly described here.

A judging unit 102 at the coding side detects motion vectors by the method described above. And when it is judged that the variation of the field of view of a camera is large, an invalidated region is determined and added information is effectively generated, and the thus generated added information is notified to a stream generator 104. On the other hand, when it is judged that the variation of the field of view is not large, no added information may be generated at all, so that a message to the effect that "no trimming is necessary" may be actively indicated. Even when the variation of the field of view is large, the invalidated region may simply be displayed without generating the added information, namely, coordinate information necessary for defining the shape of the invalidated region may be notified.

When there exist the data of the first and second images I1 and I2 and the added information, the stream generator 104 incorporates these data and the corresponding point file F then generates a coded data stream CDS and stores this CDS in a stream storage 116. On the other hand, when there does not exist the added information even if the variation of the field of view is large, the data stream generator 104 deletes the corresponding point information based on information on the invalidated region, or trims down the key frame and incorporates this trimmed key frame into the coded data stream CDS. In the case where there does not exist the added information because the range of the field of view is small, there is no need to incorporate this. However, information to the effect that "no trimming is necessary" may be actively incorporated then. Different from the first embodiment, the data of the key frames and the corresponding point file F are integrated in the coded data stream CDS, so that there does not exist a path through which the data of the key frames are separately sent to a communication unit 22, intermediate generator 18 and display unit 20.

On the other hand, the following is a structure of the decoding side. A judging unit 106 at the decoding side is an optional component, and this optional judging unit 106 is not necessary if there exists the judging unit 102 at the coding side. Now, suppose there does not exist the judging unit 102 at the coding side, then the judging unit 106 at the decoding side acquires the corresponding point file F or the coded data stream CDS which incorporates this corresponding point file F, and defines the invalidated region when the magnitude of the variation of the field of view of a camera exceeds a predetermined threshold value and then notifies this to the intermediate image generator 18.

In addition to the first embodiment, the intermediate image generator 18 cuts out the invalidate region which is included in the coded data stream CDS or which is notified from the judging unit 106. Or, the intermediate image generator 18 fills up the invalidated region with a predetermined color or texture so as to generate an intermediate image. The intermediate image generator 18 extracts image data by which to forcibly replace the data of the invalidated region, from the coded data stream CDS if such the image data exist there. The intermediate image together with the key frames are displayed as motion pictures in the display unit 20.

The above describes the coding and the decoding of the image, according to the second embodiment. In this second embodiment too, there are available various modifications and varied techniques in the similar manner to the Japanese Patent Application No. 2001-21098. Obviously, the base technology may be used or may not be used for performing the matching in the second embodiment.

Although the invalidated region is determined, as appropriate, in the second embodiment, it may be fixed in advance. In that case, the decoding side may simply cut out this fixed invalidated region every time so as to be displayed accordingly.

Although the present invention has been described by way of exemplary embodiments, it should be understood that many changes and substitutions may be made by those skilled in the art without departing from the scope of the present invention which is defined by the appended claims.

In so far as the embodiments of the invention described above are implemented, at least in part, using software-controlled data processing apparatus, it will be appreciated that a computer program providing such software control and a storage medium by which such a computer program is stored are envisaged as aspects of the present invention.

Further inventive features of the present embodiments are defined in the following paragraphs:

1. An image coding method, comprising:

   detecting corresponding point data between key frames by image matching; and
   incorporating the corresponding point data and added information by which to invalidate at least part of region of a reproduction image which is to be generated at a decoding side based on the corresponding point data, so as to generate a coded data stream.

2. An image coding method according to paragraph 1,
wherein the added information includes indication of a region to be invalidated.

3. An image coding method according to paragraph 1,
wherein the added information includes image data by which to forcibly replace data of a region to be invalidated.

4. An image coding method according to any one of paragraphs 1 to 3, wherein the corresponding point data are incorporated into the coded data stream after data which correspond to a region to be invalidated are deleted.

5. An image coding method according to any one of paragraphs 1 to 3, wherein the key frames are photographed by a camera, the method further comprising:

   judging the magnitude of variation of field of view of the camera which photographed the key frames, based on the corresponding point data,

   wherein the added information is effectively generated or effectively incorporated only when it is judged that the variation of the field of view is substantially large.

6. An image coding method according to any one of paragraphs 1 to 5, wherein the image matching is computed in a manner such that a critical point is extracted at each key frame and thereby correspondence of the critical points between the key frames is evaluated.

7. An image coding method, comprising:

   detecting corresponding point data between key frames by image matching; and
   incorporating data of the key frames whose at least part of region is invalidated, and the detected corresponding point data, so as to generate a coded data stream.

8. An image coding method according to paragraph 7,
wherein the corresponding point data are incorporated into the coded data stream in a form such that data which correspond to the invalidated region are deleted.

9. An image coding method according to any one of paragraphs 7 to 8, wherein the key frames are photographed by a camera, the method further comprising:

   judging the magnitude of variation of field of view of the camera which photographed the key frames, based on the detected corresponding point data,

   wherein the region is invalidated only when it is judged that the variation of the field of view is substantially large.

10. An image coding method according to any one of paragraphs 7 to 9, wherein the image matching is computed in a manner such that a critical point is extracted at each key frame and thereby correspondence of the critical points between the key frames is evaluated.

11. An image coding method, comprising:

   detecting corresponding point data between key frames, by image matching; and

incorporating added information by which to invalidate at least part of region of a reproduction image which is to be generated at a decoding side based on the detected corresponding point data, into the corresponding point data, so as to generate a coded data stream.

12. An image coding method according to paragraph 11,
wherein the added information includes indication of a region to be invalidated.

13. An image coding method according to paragraph 11,
wherein the added information includes image data by which to forcibly replace data of a region to be invalidated.

14. An image coding method according to any one of paragraphs 11 to 13, wherein the corresponding point data are incorporated into the coded data stream after data which correspond to a region to be invalidated are deleted.

15. An image coding method according to any one of paragraphs 11 to 14, wherein the key frames are photographed by a camera, the method further comprising:

judging the magnitude of movement of viewpoint of the camera which photographed the key frames, based on the detected corresponding point data,

wherein the added information is effectively generated only when it is judged that the movement of the viewpoint is substantially large.

16. An image coding method according to any one of paragraphs 11 to 15, wherein the image matching is computed in a manner such that a critical point is extracted at each key frame and thereby correspondence of the critical points between the key frames is evaluated.

17. An image coding method, including:

incorporating corresponding point data between key frames, and added information by which to invalidate at least part of region of an intermediate image which is to be generated at a decoding side based on the corresponding point data, so as to generate a coded data stream.

18. An image coding method according to paragraph 17,
wherein a region to be invalidated includes left and right edges of the frames when motion vectors between corresponding points of the key frames are aligned approximately in one direction parallel to the top or bottom side of the frames.

19. An image coding method according to paragraph 18,
wherein the width of the region to be invalidated is made proportional to the magnitude of the motion vectors.

20. An image coding method according to paragraph 18,
wherein whether or not the motion vectors are aligned approximately in one direction parallel to the top or bottom side of the frames is detected in a manner such that vectors of the one same direction are assumed and then the sum of difference between the assumed vectors and actual vectors are taken to determine whether or not the sum is less than a predetermined threshold value.

21. An image coding method according to paragraph 17,
wherein variation of the field of view between the key frames are presumed in advance for a plurality of ways and motion vectors between corresponding points of the key frames are made into a template, so that motion of a camera that photographed the key frames is specified and a region to be invalidated is determined.

22. An image coding method according to paragraph 17,
wherein a region to be invalidated is provided all around an image when motion vectors between corresponding points of the key frames are aligned approximately toward an upper right direction.

23. An image coding method according to paragraph 22,
wherein the width of the region to be invalidated in top and bottom sides as well as left and right sides of the image is made proportional to longitudinal and transverse directional components of the respective motion vector.

24. An image coding method according to paragraph 17, a reference region of motion vectors between corresponding points of the key frames is narrowed down to a close vicinity of the key frames when variation of the field of view between the key frames is substantially large.

25. An image coding method, including:

incorporating corresponding point data between key frames, and data of key frames whose at least part of region is invalidated, so as to generate a coded data stream.

26. An image coding method according to paragraph 25,
wherein an invalidated region includes left and right edges of the frames when motion vectors between corresponding points of the key frames are aligned approximately in one direction parallel to the top or bottom side of the frames.

27. An image coding method according to paragraph 26,
wherein the width of the invalidated region is made proportional to the magnitude of the motion vectors.

28. An image coding method according to paragraph 26,
wherein whether or not the motion vectors are aligned approximately in one direction parallel to the top or bottom side of the frames is detected in a manner such that vectors of the one same direction are assumed and then the sum of difference between the assumed vectors and actual vectors are taken to determine whether or not the sum is less than a predetermined threshold value.

29. An image coding method according to paragraph 25,
wherein variation of the field of view between the key frames are presumed in advance for a plurality of ways and motion vectors between corresponding points of the key frames are made into a template, so that motion of a camera that photographed the key frames is specified and a region to be invalidated is determined.

30. An image coding method according to paragraph 25,
wherein an invalidated region is provided all around an image when motion vectors between corresponding points of the key frames are aligned approximately toward an upper right direction.

31. An image coding method according to paragraph 30,
wherein the width of the invalidated region in top and bottom sides as well as left and right sides of the image is made proportional to longitudinal and transverse directional components of the respective motion vector.

32. An image coding method according to paragraph 25, a reference region of motion vectors between corresponding points of the key frames is narrowed down to a close vicinity of the key frames when variation of the field of view between the key frames is substantially large.

33. An image coding method, including:

incorporating added information by which to invalidate at least part of region of a reproduction image which is to be generated at a decoding side based on corresponding point data between key frames, into the corresponding point data, so as to generate a coded data stream.

34.An image coding method according to paragraph 33,
wherein a region to be invalidated includes left and right edges of the frames when motion vectors between corresponding points of the key frames are aligned approximately in one direction parallel to the top or bottom side of the frames.

35. An image coding method according to paragraph 34,
wherein the width of the region to be invalidated is made proportional to the magnitude of the motion vectors.

36. An image coding method according to paragraph 34,
wherein whether or not the motion vectors are aligned approximately in one direction parallel to the top or bottom side of the frames is detected in a manner such that vectors of the one same direction are assumed and then the sum of difference between the assumed vectors and actual vectors are taken to determine whether or not the sum is less than a predetermined threshold value.

37. An image coding method according to paragraph 33,
wherein variation of the field of view between the key frames are presumed in advance for a plurality of ways and motion vectors between corresponding points of the key frames are made into a template, so that motion of a camera that photographed the key frames is specified and a region to be invalidated is determined.

38. An image coding method according to paragraph 33,
wherein a region to be invalidated is provided all around an image when motion vectors between corresponding points of the key frames are aligned approximately toward an upper right direction.

39. An image coding method according to paragraph 38,
wherein the width of the region to be invalidated in top and bottom sides as well as left and right sides of the image is made proportional to longitudinal and transverse directional components of the respective motion vector.

40. An image coding method according to paragraph 33, a reference region of motion vectors between corresponding points of the key frames is narrowed down to a close vicinity of the key frames when variation of the field of view between the key frames is substantially large.

41. A computer program executable by a computer, the program including the function of:

incorporating corresponding point data between key frames, and added information by which to invalidate at least part of region of an intermediate image which is to be generated at a decoding side based on the corresponding point data, so as to generate a coded data stream.

42. A computer program executable by a computer, the program including the function of:

incorporating corresponding point data between key frames, and data of key frames whose at least part of region is invalidated, so as to generate a coded data stream.

43. A computer program executable by a computer, the program including the function of:

incorporating added information by which to invalidate at least part of region of a reproduction image which is to be generated at a decoding side based on corresponding point data between key frames, into the corresponding point data, so as to generate a coded data stream.

44. An image coding apparatus (10, 100), comprising:

a matching processor (14) which detects corresponding point data by image matching; and
a stream generator (104) which generates a coded data stream by incorporating the corresponding point data and added information by which to invalidate at least part of region of a reproduction image which is to be generated at a decoding side based on the corresponding point data.

45. An image coding apparatus (10, 100) according to paragraph 44, wherein the added information includes indication of a region to be invalidated.

46. An image coding apparatus (10, 100) according to paragraph 44, wherein the added information includes image data by which to forcibly replace data of a region to be invalidated.

47. An image coding apparatus (10, 100) according to any one of paragraphs 44 to 46, wherein the corresponding point data are incorporated into the coded data stream after data which correspond to a region to be invalidated are deleted.

48. An image coding apparatus (10, 100) according to any one of paragraphs 44 to 47, wherein the key frames are photographed by a camera (50), the apparatus (10, 100) further comprising:

a judging unit (102) which judges the magnitude of variation of field of view of the camera (50) which photographed the key frames, based on the corresponding point data,

wherein the added information is effectively generated or effectively incorporated only when it is judged that the variation of the field of view is substantially large.

49. An image coding apparatus (10, 100) according to any one of paragraphs 44 to 48, wherein said matching processor (14) evaluates correspondence of critical points between the key frames by extracting the critical point at each key frame.

50. An image coding apparatus (10, 100), comprising:

a matching processor (14) which detects corresponding point data between key frames by image matching; and
a stream generator (104) which generates a coded data stream by incorporating data of the key frames whose at least part of region is invalidated, and the detected corresponding point data.

51. An image coding apparatus (10, 100) according to paragraph 50, wherein the corresponding point data are incorporated into the coded data stream in a form such that data which correspond to the invalidated region are deleted.

52. An image coding apparatus (10, 100) according to any one of paragraphs 50 to 51, wherein the key frames are photographed by a camera (50), the apparatus (10, 100) further comprising:

a judging unit (102) which judges the magnitude of variation of field of view of the camera (50) which photographed the key frames, based on the detected corresponding point data,

wherein the region is invalidated only when it is judged that the variation of the field of view is substantially large.

53. An image coding apparatus (10, 100) according to any one of paragraphs 50 to 51, wherein said matching processor (14) evaluates correspondence of critical points between the key frames by extracting the critical point at each key frame.

54. An image coding apparatus (10, 100), comprising:

a matching processor (14) which detects corresponding point data between key frames by image matching; and a stream generator (104) which generates a coded data stream by incorporating added information by which to invalidate at least part of region of a reproduction image which is to be generated at a decoding side based on the detected corresponding point data, into the corresponding point data, so as to generate a coded data stream.

55. An image coding apparatus (10, 100) according to paragraph 54, wherein' the added information includes indication of a region to be invalidated.

56. An image coding apparatus (10, 100) according to paragraph 54, wherein the added information includes image data by which to forcibly replace data of a region to be invalidated.

57. An image coding apparatus (10, 100) according to any one of paragraphs 54 to 56, wherein the corresponding point data are incorporated into the coded data stream after data which correspond to a region to be invalidated are deleted.

58. An image coding apparatus (10, 100) according to any one of paragraphs 54 to 57, wherein the key frames are photographed by a camera (50), the apparatus (10, 100) further comprising:

a judging unit (102) which judges the magnitude of movement of viewpoint of the camera (50) which photographed the key frames, based on the detected corresponding point data,

wherein the added information is effectively generated only when it is judged that the movement of the viewpoint is substantially large.

59. An image coding apparatus (10, 100) according to any one of paragraphs 54 to 58, wherein said matching processor (14) evaluates correspondence of critical points between the key frames by extracting the critical point at each key frame.

60. An image coding apparatus (10, 100), including:

a stream generator (104) which generates a coded data stream by incorporating corresponding point data between key frames, and added information by which to invalidate at least part of region of an intermediate image which is to be generated at a decoding side based on the corresponding point data.

61. An image coding apparatus (10, 100), including:

a stream generator (104) which generates a coded data stream by incorporating corresponding point data between key frames, and data of key frames whose at least part of region is invalidated.

62. An image coding apparatus (10, 100), including:

a stream generator (104) which generates a coded data stream by incorporating added information by which to invalidate at least part of region of a reproduction image which is to be generated at a decoding side based on corresponding point data between key frames, into the corresponding point data.

63. An image decoding method, comprising:

acquiring a coded data stream of an image; and
generating an intermediate frame based on corresponding point data between key frames included in the acquired coded data stream,

wherein the intermediate frame is generated in a manner that at least part of region thereof is invalidated.

64. An image decoding method according to paragraph 63,
wherein said generating is processed by extracting indication of a region to be invalidated, from the coded data stream.

65. An image decoding method according to paragraph 63,
wherein said generating is processed by extracting image data which forcibly replaces data of a region to be invalidated, from the coded data stream.

66. An image decoding method according to any one of paragraphs 63 to 65, further comprising:

judging the magnitude of variation of field of view of a camera which photographed the key frames based on the corresponding point data,

wherein said invalidating is executed only when it is judged that the variation of the field of view is substantially large.

67. A computer program executable by a computer, the program comprising the functions of:

acquiring a coded data stream of an image; and
generating an intermediate frame based on corresponding point data between key frames included in the acquired coded data stream,

wherein the intermediate frame is generated in a manner that at least part of region thereof is invalidated.

68. An image decoding apparatus (10, 100), comprising:

an image input unit (12) which acquires a coded data stream of an image; and
an intermediate image generator (18) which generates an intermediate frame based on corresponding point data between key frames included in the acquired coded data stream,

wherein said intermediate image generator (18) generates the intermediate frame in a manner that at least part of region thereof is invalidated.

69. An image decoding apparatus (10, 100) according to paragraph 68, wherein said intermediate image generator (18) extracts indication of a region to be invalidated, from the coded data stream.

70. An image decoding apparatus (10, 100) according to paragraph 68, wherein said intermediate image generator (18) extracts image data which forcibly replaces data of a region to be invalidated, from the coded data stream.

71. An image decoding apparatus (10, 100) according to any one of paragraphs 68 to 70, further comprising:

a judging unit (106) which judges the magnitude of variation of field of view of a camera (50) which photographed the key frames based on the corresponding point data,

wherein said invalidating is executed only when it is judged that the variation of the field of view is substantially large.

**Claims**

1. An image coding method, comprising:

detecting corresponding point data between key frames by image matching; and
incorporating the corresponding point data and added information by which to invalidate at least part of region of a reproduction image which is to be generated at a decoding side based on the corresponding point data, so as to generate a coded data stream.

2. An image coding method according to Claim 1, wherein the added information includes indication of a region to be invalidated.

3. An image coding method according to Claim 1, wherein the added information includes image data by which to forcibly replace data of a region to be invalidated.

4. An image coding method according to any one of Claims 1 to 3, wherein the corresponding point data are incorporated into the coded data stream after data which correspond to a region to be invalidated are deleted.

5. An image coding method according to any one of Claims 1 to 3, wherein the key frames are photographed by a camera, the method further comprising:

judging the magnitude of variation of field of view of the camera which photographed the key frames, based on the corresponding point data,

wherein the added information is effectively generated or effectively incorporated only when it is judged that the variation of the field of view is substantially large.

6. An image coding method according to any one of Claims 1 to 5, wherein the image matching is computed in a manner such that a critical point is extracted at each key frame and thereby correspondence of the critical points between the key frames is evaluated.

**7.** Computer software having program code for carrying out a method according to any one of Claims 1 to 6.

**8.** An image coding apparatus (10, 100), comprising:

a matching processor (14) which detects corresponding point data by image matching; and
a stream generator (104) which generates a coded data stream by incorporating the corresponding point data and added information by which to invalidate at least part of region of a reproduction image which is to be generated at a decoding side based on the corresponding point data.

**9.** An image coding apparatus (10, 100) according to Claim 8, wherein the added information includes indication of a region to be invalidated.

**10.** An image coding apparatus (10, 100) according to Claim 8, wherein the added information includes image data by which to forcibly replace data of a region to be invalidated.

**11.** An image coding apparatus (10, 100) according to any one of Claims 8 to 10, wherein the corresponding point data are incorporated into the coded data stream after data which correspond to a region to be invalidated are deleted.

**12.** An image coding apparatus (10, 100) according to any one of Claims 8 to 11, wherein the key frames are photographed by a camera (50), the apparatus (10, 100) further comprising:

a judging unit (102) which judges the magnitude of variation of field of view of the camera (50) which photographed the key frames, based on the corresponding point data,

wherein the added information is effectively generated or effectively incorporated only when it is judged that the variation of the field of view is substantially large.

**13.** An image coding apparatus (10, 100) according to any one of Claims 8 to 12, wherein said matching processor (14) evaluates correspondence of critical points between the key frames by extracting the critical point at each key frame.

**14.** An image decoding method, comprising:

acquiring a coded data stream of an image; and
generating an intermediate frame based on corresponding point data between key frames included in the acquired coded data stream,

wherein the intermediate frame is generated in a manner that at least part of region thereof is invalidated.

**15.** An image decoding method according to Claim 14,
wherein said generating is processed by extracting indication of a region to be invalidated, from the coded data stream.

**16.** An image decoding method according to Claim 14,
wherein said generating is processed by extracting image data which forcibly replaces data of a region to be invalidated, from the coded data stream.

**17.** An image decoding method according to any one of Claims 14 to 16, further comprising:

judging the magnitude of variation of field of view of a camera which photographed the key frames based on the corresponding point data,

wherein said invalidating is executed only when it is judged that the variation of the field of view is substantially large.

18. Computer software having program code for carrying out a method according to any one of Claims 14 to 17.

19. An image decoding apparatus (10, 100), comprising:

an image input unit (12) which acquires a coded data stream of an image; and
an intermediate image generator (18) which generates an intermediate frame based on corresponding point data between key frames included in the acquired coded data stream,

wherein said intermediate image generator (18) generates the intermediate frame in a manner that at least part of region thereof is invalidated.

20. An image decoding apparatus (10, 100) according to Claim 19, wherein said intermediate image generator (18) extracts indication of a region to be invalidated, from the coded data stream.

21. An image decoding apparatus (10, 100) according to Claim 19, wherein said intermediate image generator (18) extracts image data which forcibly replaces data of a region to be invalidated, from the coded data stream.

22. An image decoding apparatus (10, 100) according to any one of Claims 19 to 21, further comprising:

a judging unit (106) which judges the magnitude of variation of field of view of a camera (50) which photographed the key frames based on the corresponding point data,

wherein said invalidating is executed only when it is judged that the variation of the field of view is substantially large.

Fig.1a  Fig.1b

Fig.1c  Fig.1d

Fig.1e  Fig.1f

Fig.1g  Fig.1h

Fig.1i  Fig.1j

Fig.2R

Fig.2A

Fig.2E

Fig.2B

Fig.2D

Fig.2C

$f^{(m-1,s)}$

$f^{(m-1,s)}$ source image

$f^{(m-1,s)}$

$f^{(m-1,s)}$

the inherited quadrilateral

destination image

Fig. 3

Fig. 4

Fig. 5a

Fig. 5b

```
        ┌─────────┐
        │  START  │
        └─────────┘
             │
             ▼        S1
   ┌───────────────────────┐
   │        MULTI-         │
   │     RESOLUTIONAL      │
   │       FILTERING       │
   └───────────────────────┘
             │
             ▼        S2
   ┌───────────────────────┐
   │    IMAGE MATCHING     │
   └───────────────────────┘
             │
             ▼
        ┌─────────┐
        │   END   │
        └─────────┘
```

Fig. 6

```
        ┌─────────────┐
        │  START S1   │
        └─────────────┘
               │
               ▼          S10
   ┌───────────────────────────┐
   │        HIERARCHIZE        │
   │      SOURCE IMAGE         │
   └───────────────────────────┘
               │
               ▼          S11
   ┌───────────────────────────┐
   │        HIERARCHIZE        │
   │    DESTINATION IMAGE      │
   └───────────────────────────┘
               │
               ▼
        ┌─────────────┐
        │   END S1    │
        └─────────────┘
```

Fig. 7

START S10

S100

$m \leftarrow n$

S101

DETECT
CRITICAL POINT

S102

GENERATE M-1
LEVEL IMAGE

S103

$m \leftarrow m-1$

S104

N ← $m < 0?$

Y

END S10

Fig. 8

$p^{(m, s)}$

$p^{(m-1, 0)}$

$p^{(m-1, 1)}$

$p^{(m-1, 2)}$

$p^{(m-1, 3)}$

Fig. 9

Fig. 10

START PREPARA-
TION FOR S2

S30

SET TWO OR MORE
EVALUATION EQUATIONS

S31

SET INTEGRAL
EVALUATION EQUATION

END PREPARA-
TION FOR S2

## Fig.11

Fig.12

$p^{(0, s)}$          $q^{(0, s)}$

## Fig.13

$p^{(1, s)}$          $q^{(1, s)}$

A          B          A'          B'

a          b          a'          b'

x

C          D          C'          D'

c          d          c'          d'

## Fig.14

START S21

$s \leftarrow 0$
$\lambda \leftarrow 0$   S210

S211

COMPUTE
$f^{(m,s)}$ $(\lambda = i\Delta\lambda)$

$\lambda \leftarrow \lambda + \Delta\lambda$   S212

S213

N   $\lambda > \lambda_{max}$?

Y

DETERMINE
$\lambda_{opt}$ AND $f^{(m,s)}$   S214

$\lambda \leftarrow 0$
$s \leftarrow s+1$   S215

S16

N   $s > 4$?

Y

END S21

Fig.15

Fig.16

Fig.17

Fig.18

Fig.19

Fig.20

```
         ┌──────────────┐
         │    START     │
         └──────────────┘
                │
                │                              S10
    ┌───────────────────────────────────┐
    │   MATCHING ON LATTICE POINT        │
    └───────────────────────────────────┘
                │
                │                              S12
    ┌───────────────────────────────────┐
    │      DEFINE A DESTINATION          │
    │           POLYGON                  │
    └───────────────────────────────────┘
                │
                │                              S14
    ┌───────────────────────────────────┐
    │    OUTPUT CORRESPONDING            │
    │         POINT FILE                 │
    └───────────────────────────────────┘
                │
         ┌──────────────┐
         │     END      │
         └──────────────┘
```

Fig.21

START

S20

FIRST AND SECOND IMAGES
ARE READ IN

S22

CORRESPONDING POINT FILE
IS READ IN

S24

CORRESPONDENCE RELATIONS
BETWEEN POINTS IN POLYGONS
ARE COMPUTED

S26

GENERATE AN
INTERMEDIATE IMAGE

S28

DISPLAY

END

Fig.22

Fig.23

Fig.24

r1             r2

IVR

Fig.25

Fig.26

r1=IVR

Fig.27

Fig.28

Fig.29

100

IMAGE INPUT UNIT — 12

I1,I2

14

I1,I2

102

JUDGING UNIT

104

MATCHING PROCESSOR

CDS

F → STREAM GENERATOR

MESH DATA

CDS 116

STREAM STORAGE

18

CDS

CDS

INTERMEDIATE IMAGE GENERATOR ← JUDGING UNIT

106

CDS

DISPLAY UNIT — 20 22 — COMMUNICATION UNIT

IMAGE PROCESSING APPARATUS

USER                    NETWORK

Fig.30